Europäisches Patentamt

European Patent Office

Office européen des brevets

(19)

(11) **EP 1 078 557 B1**

(12) **EUROPEAN PATENT SPECIFICATION**

(45) Date of publication and mention
of the grant of the patent:
**31.07.2002 Bulletin 2002/31**

(21) Application number: **99912801.0**

(22) Date of filing: **22.03.1999**

(51) Int Cl.7: **H05B 41/392**, H01F 38/10

(86) International application number:
**PCT/US99/06228**

(87) International publication number:
**WO 99/55125 (28.10.1999 Gazette 1999/43)**

(54) **DIMMING BALLAST AND DRIVE METHOD FOR LAMPS USING A FREQUENCY CONTROLLED, LOOSELY-COUPLED TRANSFORMER**

VORSCHALTGERÄT MIT HELLIGKEITSSTEUERUNG UND REGELVERFAHREN FÜR LAMPEN UNTER VERWENDUNG EINES FREQUENZGEREGELTEN STREUFELDTRANSFORMATORS

BALLAST DE GRADATION ET PROCEDE D'EXCITATION DE LAMPES UTILISANT UN TRANSFORMATEUR A COUPLAGE LACHE REGULE PAR FREQUENCE

(84) Designated Contracting States:
**DE ES FR GB IT**

(30) Priority: **21.04.1998 US 63934**
**30.09.1998 US 163948**
**30.09.1998 US 164102**

(43) Date of publication of application:
**28.02.2001 Bulletin 2001/09**

(73) Proprietor: **Power Circuit Innovations, Inc**
**Boulder, CO 80301-5432 (US)**

(72) Inventor: **ADAMSON, Hugh, Patrick**
**Boulder, CO 80303 (US)**

(74) Representative:
**Bohnenberger, Johannes, Dr. et al**
**Meissner, Bolte & Partner**
**Postfach 86 06 24**
**81633 München (DE)**

(56) References cited:
**EP-A- 0 108 815          EP-A- 0 461 441**
**WO-A-93/01695          GB-A- 1 240 556**
**US-A- 3 919 595          US-A- 4 100 476**
**US-A- 5 047 696          US-A- 5 648 702**

**Description**

**BACKGROUND OF THE INVENTION**

Field of the Invention:

The present invention relates to a dimmable electronic ballast for lamps and more particularly to a dimmable electronic ballast for lamps comprising a loosely coupled transformer in which current to the lamps is adjusted to dim the illumination provided by the lamps.

Description of the Related Art:

An electronic ballast is used to convert commercial electrical power into a high voltage electrical signal sufficient to create and maintain a plasma in a gas discharge lamp. Typical examples of gas discharge lamps are fluorescent lamps and neon lamps. Transformers are typically used in ballast circuits to boost the voltage across the lamps.

Shunted transformers (also generally known as loosely coupled transformers, or leakage transformers) are transformers having higher than usual leakage inductance. Where the intent in standard power transformers is to produce a transformer that is very tightly coupled, i.e., to create a transformer with very low reactance, the opposite is true with respect to shunted transformers where the reactance resulting from a shunt is traded off for current limiting capability. The geometry of the transformer core, and the nature of the windings of the coils, are factors that can affect the leakage inductance. All known transformer designs have at least a small amount of reactance, thus the concept of a leakage transformer is based on a relative scale.

As the terms are used herein, a "tightly coupled" transformer is considered to be one in which a very high percentage of the magnetic flux developed in the transformer's primary winding is delivered to its secondary winding. See pages 223, 224, 234, 235 and other general information in Electronic Transformers and Circuits, 2nd Edition, by Reuben Lee, published in 1955 by John Wiley, New York, NY. For example, placing the primary winding of a transformer on top of its secondary winding or interleaving the windings will provide a tightly coupled transformer in which substantially all the flux developed in the primary winding "flows" in the secondary winding by physical definition.

A "loosely coupled" transformer, on the other hand, is considered to be a transformer in which a lesser amount of the magnetic flux developed in the transformer's primary winding finds its way to the secondary winding. This relationship can also be expressed in terms of a transformer's coupling ratio, as defined by Lee on page 235 of his aforementioned reference, where "k", the coefficient of coupling (which varies from 0 to 1) is determined from:

$$(1) \qquad (I_2^{\,2} Z_2 / E_1 I_1)_{MAX} = k^2 / 2(1 + (1 - k^2)^{\frac{1}{2}} - k^2$$

in which, "I" indicates current, "E" indicates voltage, "Z" indicates impedance, the "1" subscript refers to the primary and the "2" subscript refers to the secondary of a transformer under consideration. Ratio values for "k" below 0.90 are considered to be loosely coupled with ratio values above 0.99 (an arbitrary dividing line) considered to be tightly coupled.

In addition to using magnetic flow as a measure of coupling, it is also possible to ascertain coupling using the inductance exhibited by the primary when the secondary is open and when it is shorted. The condition of the secondary winding circuit, open or shorted, determines the amount of current flow and, derivatively, the inductance exhibited by the primary winding. The ratio of the primal winding inductance under these two extremes gives rise to another form of coupling measurement as shall hereinafter be further described.

Leakage transformers may be gapped or ungapped, depending on the overall design and electrical characteristics. Loosely coupled shunted transformers having an air gap in one of their legs function in the following fashion. Typically, a E-shaped or multi-legged magnetic core is employed with the air gapped leg having a specific magnetic reluctance determined in part by the size of the air gap. One of the non-shunted legs holds the primary winding and the other non-shunted leg holds one or more secondary windings. The shunt is not usually provided with a winding.

The loop including the gapped leg has a fixed reluctance that is significantly higher than that of the secondary loop when the secondary is at low load or is entirely unloaded. In fact, at low load, the secondary winding magnetic loop will have most of the flux flowing through it and the secondary voltage will be high. As the load increases, the reluctance of the secondary loop increases and the secondary voltage decreases. As the secondary load approaches a short or is actually shorted (secondary voltage is zero), the majority of magnetic flux now flows through the gapped leg as its magnetic reluctance is lower than the high reluctance of the secondary winding loop. Thus, at low secondary voltage, the current is high, but limited to a value determined by the reluctance of the gapped leg.

There are basically two types of variable leakage reactance transformers used to control or limit current flow. As described in U.S. Patent No. 4,123,736 to Brougham entitled LEAKAGE REACTANCE TRANSFORMER, they are commonly referred to as the moving coil type and the moving shunt type. The moving coil type transformer relies on moving one of its windings relative to the other to adjust leakage reactance. In the shunted type transformer, a steel shunt is movably mounted on a frame located between spaced apart primary and secondary windings and is moved into and out of the space between the windings to vary the transformer's reactance. In both types of transformers, degrees of control are predicated on mechanical movement of a winding or a shunt and it is, therefore, difficult to achieve precision current control at fixed frequency. Further, as noted in the Brougham reference, the costs of such transformers is relatively high, especially when higher cost arrangements are needed to overcome problems presented by wear, jamming and the lack of precision control.

In U.S. Patent No. 4,187,450 to Chen for HIGH FREQUENCY BALLAST TRANSFORMER, a transformer is described that is particularly useful in conjunction with solid state, high frequency push-pull inverters for supplying power to gas discharge lamps. The Chen transformer comprises a pair of facing E-shaped core sections disposed adjacent to one another in a mirror image fashion with their corresponding legs aligned but with an air gap provided between the middle, non-touching legs of the core. The transformer is described as being wound in a special fashion to overcome prior art limitations of insufficient ballasting reactance (needed to overcome the negative impedance at startup exhibited by gas discharge lamps) and magnetic leakage. This reference, however, does not teach any method of utilizing frequency or current control to regulate power or signals provided to the secondary of a loosely coupled transformer.

Another air gapped transformer is described in U.S. Patent No. 4,888,527 to Lindberg for REACTANCE TRANSFORMER CONTROL FOR DISCHARGE DEVICES. In this prior art device for obtaining current limited control of gas discharge lamps, one leg of a three legged transformer is provided with an air gap and fixed reluctance. The transformer's reactance is varied by means of a separate control winding that varies the reluctance of the transformer leg on which it is wound as a function of a variable impedance included in a control circuit used to drive the control winding.

U.S. Patent No. 5,192,896 to Qin for VARIABLE CHOPPED INPUT DIMMABLE ELECTRONIC BALLAST teaches an output transformer having a loosely coupled primary and secondary winding and a pair of slidable magnetic shunts. The Qin transformer is constructed from a pair of facing E-shaped ferrite cores having an air gap in its center leg. The primary and secondary windings are separated from each other by a pair of shunt housings in which the movable shunts are slidably mounted. By adjusting the position of the shunts, the parameters of the transformer can be adjusted to match the load requirements.

U.S. Patent No. 4,100,476 to Ghiringhelli for SINGLE SECONDARY DIMMING INVERTER/BALLAST FOR GAS DISCHARGE LAMPS teaches a multipath leakage transformer having a primary winding and multiple secondary windings. Ghiringhelli teaches independent control of the amount of leakage and voltage ratios for each secondary magnetic path to isolate the secondary paths. Each secondary is connected to a tuning capacitor and through a "ballast capacitor" to a lamp. The secondary winding circuits are individually tuned with the tuning capacitor for maximum energy transfer, i.e. the resonant frequency for the secondary winding circuit. At resonant frequency, the impedance of the transformer is near zero. In effect the transformer at the tuned frequency looks like a tightly coupled transformer. Even near the tuned frequency the transformer impedance is much smaller than impedance of the lamp. Ghiringhelli teaches that by moving off of the tuned frequency, the voltage drop across a "ballast capacitor" connected in series with the load increases so that power to the lamps decreases.

As described above, there were a number of prior art transformer arrangements that sought to take advantage of the inherent characteristics of shunted transformers by varying winding methods or positioning, using slidable shunts and adding control windings to various portions of such transformers. While these attempts at improving the results achieved by control or modification of reactance transformers did achieve better operating results or manufacturing costs, they still failed to yield the degree of precision, low cost, efficiency and versatility required by modern power transferring arrangements.

The brightness of a gas discharge lamp can be controlled by adjusting the output power of the ballast. Dimmable electronic ballasts typically use pulse width modulation (PWM) to control output power. In a typical PWM circuit, the width of a square wave pulse is adjusted so as to change the total power delivered to the load. It would be undesirable, in many designs, to vary the frequency because many ballast designs have a resonant output stage that helps boost the output voltage. The driving frequency for the output stage, including the transformer, of a PWM circuit is typically held constant to maintain the resonance.

Metal halide high intensity gas discharge lamps are generally not provided with a dimming capability since the continuous arc necessary to maintain the gas discharge requires a voltage source. Where such lamps are provided with an intensity, control the control system is very costly. One approach conventionally used is to have a two level voltage source which switches between 90% and 100% power. Another approach, only used at low frequency, i.e., 60Hz, simply utilizes a Variac to vary the voltage applied. However, at high frequencies, dimming is not conventionally done.

It would therefore be desirable to have an electronic ballast design that is efficient and less expensive than current designs. It would also be desirable to have an electronic ballast design that does not require a resonant circuit in its output stage.

## SUMMARY OF THE INVENTION

The present invention improves on the prior art devices by providing a simple and inexpensive dimmable electronic ballast that takes advantage of the properties of a loosely coupled transformer. The circuit of the present invention employs frequency modulation in combination with the electrical properties of the loosely coupled transformer to control the electrical current applied to the lamps to control the illumination intensity provided by the lamps. By varying the frequency in the primary coil of the loosely coupled transformer powering the lamps, the current can be controlled in the secondary coil and the lamp through the inherent reactance of the transformer. The light output of the lamp is thereby controllably dimmed.

In an additional feature of the invention a plurality of gas discharge lamps are connected in true parallel to the dimming ballast such that failure of one lamp does not affect operation of the remaining gas discharge lamps.

In a further feature of the invention, the dimmer ballast for a high intensity discharge lamp utilizes an over-wound loosely coupled transformer with a peaking capacitor across the secondary output terminals of the transformer and in parallel with the HID lamp electrodes.

The primary advantage and the utility of the present invention is that it provides an effective dimmable control for gas discharge lamps. This advantage is achieved through the use of a loosely coupled transformer in conjunction with an output drive circuit that permits the dimming operation.

Other features and advantages of the present invention will become apparent from a reading of the following detailed description when taken in conjunction with the accompanying drawing wherein a particular embodiment of the invention is disclosed as an illustrative example.

## BRIEF DESCRIPTION OF THE DRAWINGS

A more complete understanding of the present invention can be obtained by considering the following detailed description of the preferred embodiments thereof in conjunction with the accompanying drawings, in which:

FIGURE 1 is a block diagram of the main functional elements of a dimming electronic ballast in which transformer control is employed.

FIGURE 2 is a schematic diagram of a dimming electronic ballast wherein a loosely coupled transformer under frequency control is used to supply power to a load comprising gas discharge lamps.

FIGURE 3 illustrates the output voltage haversines obtained from a full wave rectifier bridge utilized in the electronic ballast shown in FIGURE 2.

FIGURE 4 depicts a schematic diagram of a non-dimming electronic ballast wherein a loosely coupled transformer under frequency control is used to supply power to a load comprising gas discharge lamps.

FIGURE 5(a) is a diagram of a loosely coupled transformer of the type incorporated in embodiments of the present invention.

FIGURE 5(b) is a diagram of an alternative gapless embodiment of a loosely coupled transformer.

FIGURE 6 shows an equivalent model circuit of a loosely coupled transformer.

FIGURE 7 depicts a plot of winding current in a loosely coupled transformer as a function of the frequency of the voltage applied thereto.

FIGURE 8 shows a block diagram of a control arrangement which utilizes a loosely coupled transformer.

FIGURE 9 schematically depicts use of a loosely coupled transformer under frequency control to supply power to a thermoelectric load in accordance with the present invention.

FIGURE 10 shows a block diagram of the use of a loosely coupled transformer under frequency control to supply a train of pulses to a remote receiving circuit.

FIGURE 11 schematically illustrates use of a loosely coupled transformer under frequency control in accordance with the present invention to supply power to a sub-station or industrial site.

FIGURE 12 is an electrical schematic diagram of another embodiment of a dimmable electronic ballast.

FIGURE 13 is a block diagram schematic of a feedback control loop.

FIGURE 14 is an electrical schematic diagram of an embodiment of a dimmable electronic ballast for control of parallel connected gas discharge lamp fixtures.

FIGURE 15 is an electrical schematic diagram of the circuit to connect the gas discharge lamps to the ballast shown in FIGURE 14.

FIGURE 16 is a simplified electrical schematic diagram of the output drive portion of the embodiment shown in FIGURE 14 for remote installation of the loosely coupled transformers T2, T3, T4, and T5.

FIGURE 17 is a schematic diagram of a dimmable electronic ballast for control of a HID lamp according to a preferred embodiment of the present invention.

FIGURE 18 is a graph of frequency versus time for a ballast as shown in FIGURE 17.

FIGURE 19 is a graph of lamp power versus frequency during lamp startup for the HID lamp shown in FIGURE 17.

FIGURE 20 is a graph of lamp load power versus frequency for operation of the HID lamp shown in FIGURE 17.

## DETAILED DESCRIPTION OF THE PREFERRED EMBODIMENTS

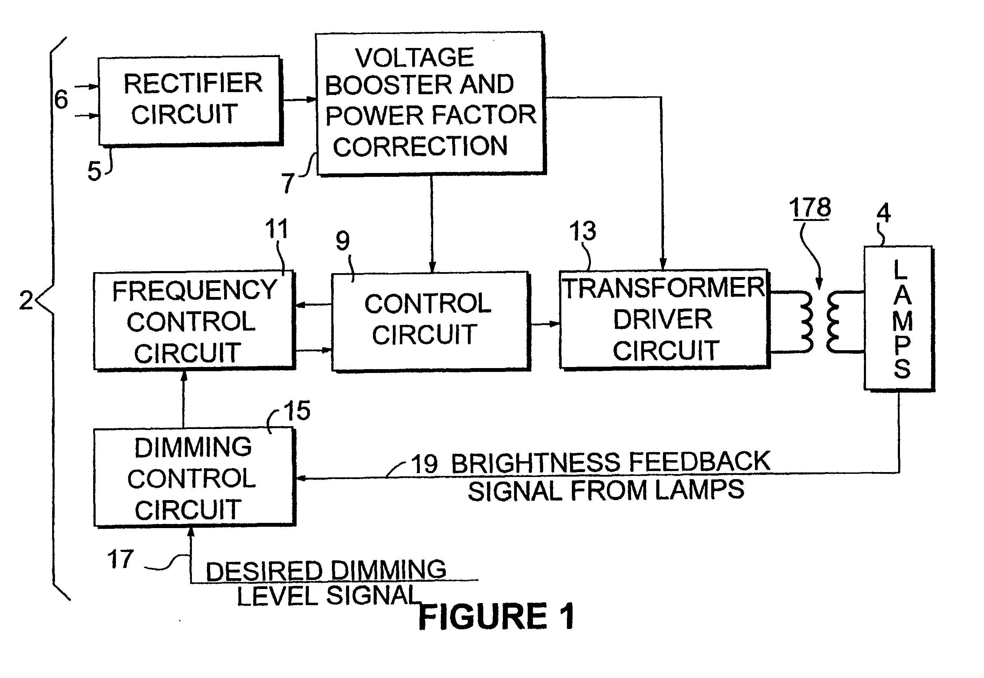

Referring now to the drawings, wherein like reference numerals have been used in the several views to identity like elements. FIGURE 1 illustrates a block diagram of an electronic dimming ballast 2. In its most general form, the electronic dimming ballast 2 may be used to control various loads, and as such the ballast 2 may also be referred to herein as a controller. The general nature of the controller is a Frequency Modulated (FM) circuit that utilizes the inherent current limiting characteristics of transformer 178 to control power to a load. Variations in frequency will control the current flow through the secondary winding of the transformer 178, and thereby limit the electrical power to a load.

One of the reasons that FM is applicable in this circuit is that there is no attempt to maintain a resonance in the output stage. Many prior controllers attempt to maintain a resonant stage, which typically requires operation within a narrow frequency band. While the present controller may have circuit dynamics with a resonant frequency, there is no attempt to excite and maintain such a resonance.

The load is shown as a lamp 4 in FIGURE 1, but the load may also be an electric motor, heater, cooler, or another device as would be known to electrical engineers. The design is also applicable to current limiting DC to DC converters and AC to DC converters.

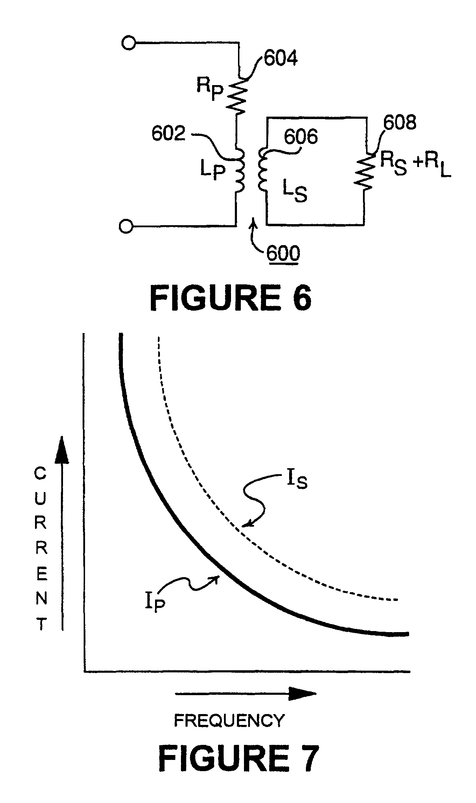

The controller comprises a power supply circuit, which may include a rectifier, amplifier, power factor corrector, filter, buffer, and other signal processing circuitry that is generally used in power supply circuits adapted for use with commercial Alternating Current (AC) power. The controller also comprises a Voltage Controlled Oscillator (VCO), shown as 11 in FIGURE 1, connected to the power supply circuit, to produce a frequency modulated (FM) output signal in response to a voltage input. The controller further comprises a loosely coupled transformer 178 having at least one primary winding and at least one secondary winding. The primary winding is electrically connected to the adjustable frequency output signal, in addition to being connected to other elements of the power supply. The secondary winding is electrically connected to supply current to the load. The transformer 178 has the general property shown in FIGURE 7, wherein the current in the secondary winding is responsive to the adjustable frequency output.

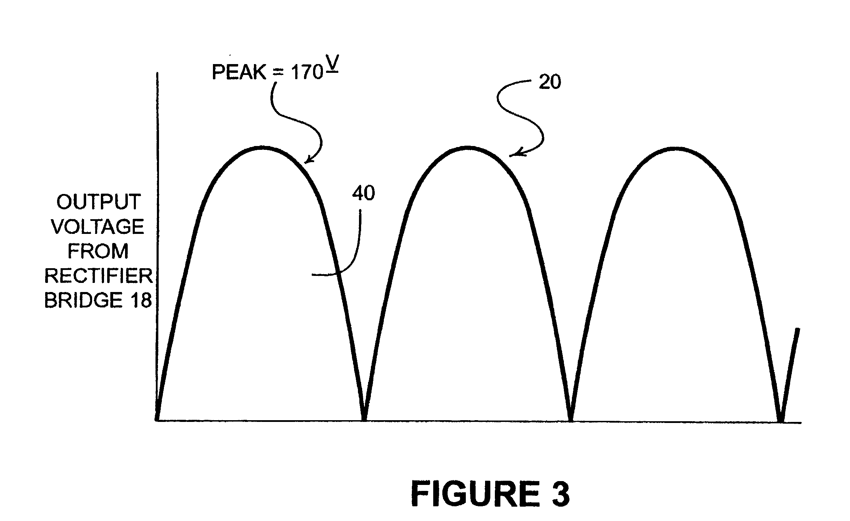

A further description of FIGURE 1 follows. A line voltage source 6, having a frequency and voltage level normal for the specific location of the world at which the ballast is being used, that provides power to the ballast 2. The supplied voltage is rectified by circuit 5 to a continuous series of haversines, see FIGURE 3, and passed on to a voltage booster and power factor correction circuit 7. The circuit elements of block 7 serve to raise the voltage level to a self-sustaining value appropriate for control circuit 9 and the gas discharge type of lamps 4 being used. Control circuit 9 forwards a reference voltage signal to the frequency control circuit 11, which adjusts the frequency of its output in accordance with that reference, subject to any changes in that output frequency called for and required by the dimming control circuit 15 through its desired dimming level signal 17. As shown in FIGURE 1, the dimming control circuit 15 also receives a brightness feedback signal 19 from the lamps 4 which it compares to the desired dimming level signal 17 to derive a differential signal, whenever signals 17 and 19 are different, that is used to adjust the frequency of the voltage output by frequency control circuit 11.

The output from frequency control circuit block 11 is fed to control circuit 9 where it is used to produce a closely matched square wave voltage that is forwarded to transformer drivers circuit 13. The transformer drivers thereby created in block 13 are used to generate drivers for a special transformer 178, to be described hereinafter in greater detail, that is coupled to the lamps 4 whereby power is delivered to the lamps 4.

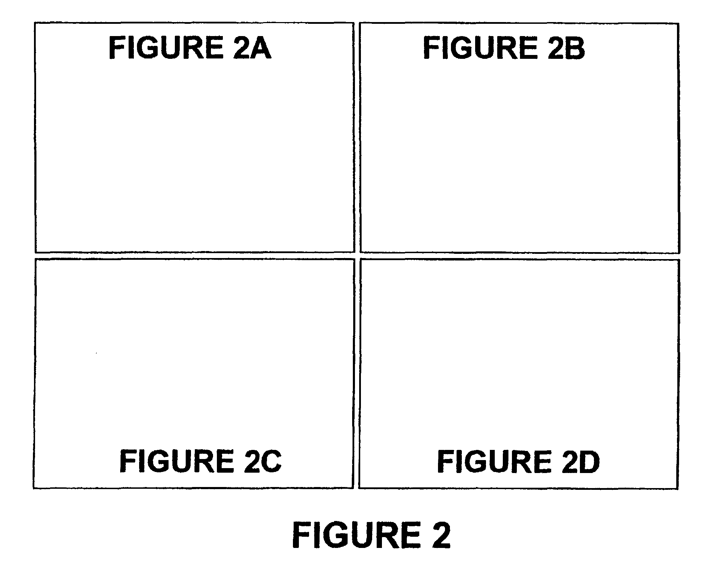

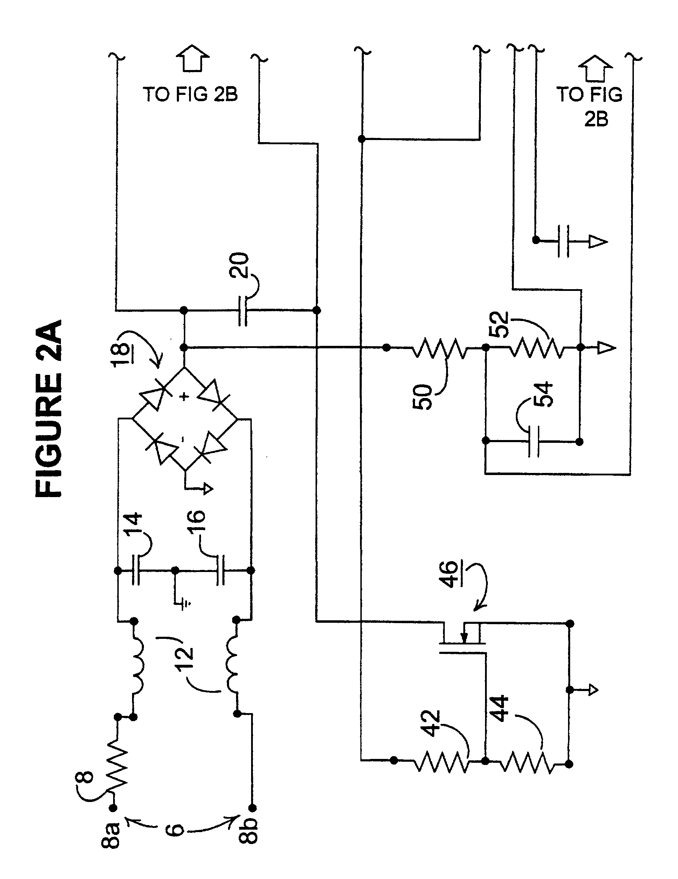

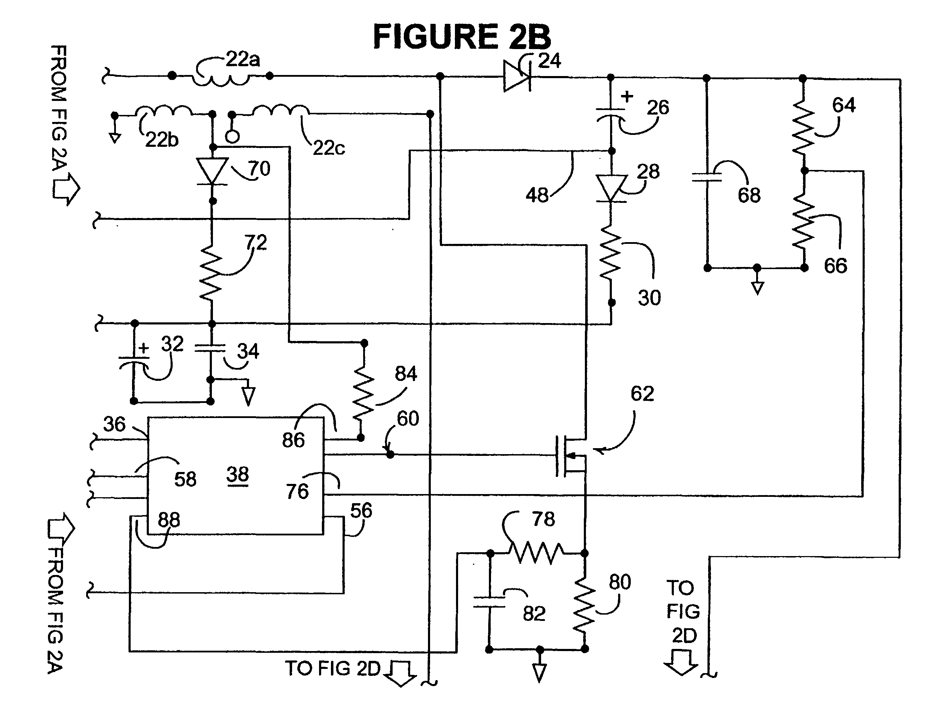

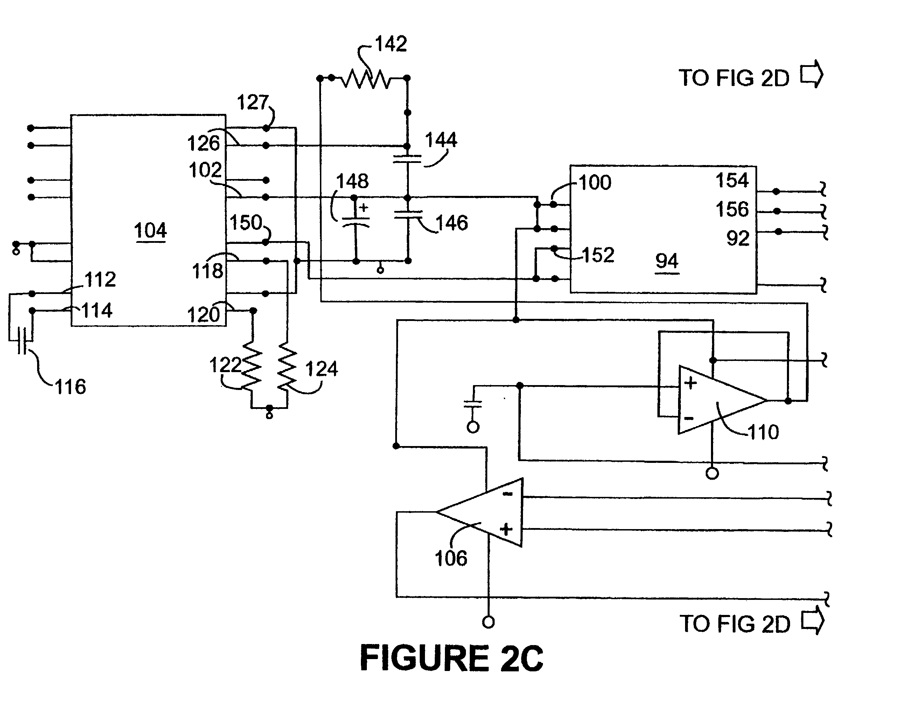

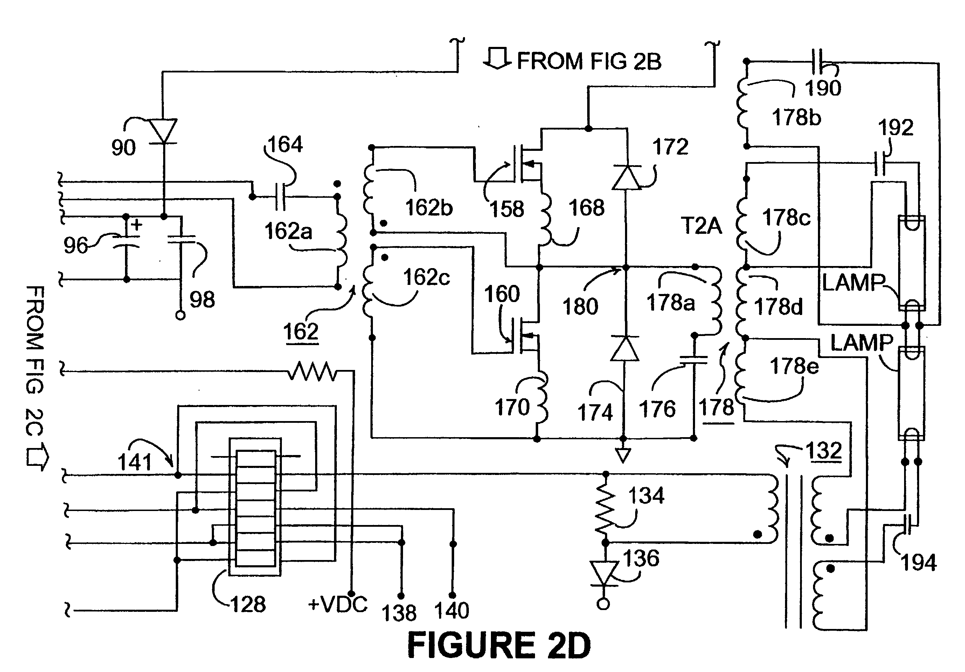

FIGURE 2 illustrates in greater detail the components of a dimming electronic ballast 2 used for coupling a set of fluorescent lamps 4 to the source of electrical power 6 at input terminals 8a and 8b. The power source in this instance is 110 volts AC at a frequency of 60 hertz, the standard power conditions found in the United States. The depicted ballast 2, however, can accept input voltages in the range of 90 to 300 volts AC at frequencies of 50 to 60 hertz or 140 to 450 volts DC. This permits the electronic ballast to function satisfactorily, in full accordance with its specifications, in any country in the world under most power conditions that will be encountered.

Resister 10 is connected in series with input terminal 8a and serves as a fuse or current limiting device. Resistor 10 represents a simple way to protect against overloads or excessive transients that would otherwise harm the ballast or compromise safety. Inductors 12 and capacitors 14 and 16 form an Electromagnetic Interference (EMI) or common mode choke filter that reduces EMI conducted to terminals 8a and 8b by limiting high frequency signals and passing only signals that have a complete path through the ballast 2.

Full wave rectifier bridge 18 converts the input signal in standard fashion into the rectified output shown in FIGURE 3. The output voltage 20 of bridge 18 passes through several paths, the first including boost choke 22a, diode 24 which provides power to output FETs 158 and 160, as will be discussed hereinafter, capacitor 26, resistor 30, diode 28 and capacitors 32 and 34. Capacitors 32 and 34 are connected to input pin 36 of power factor chip 38.

Power factor chip 38 is a Motorola MC33262 integrated circuit chip which is more fully described at pages 3-455 to 3-457 of Motorola's Analog/Interface ICs, Device Data, Volume 1, Revision 5, 1995. Integrated circuit chip 38 is a high performance, current mode power factor controller that is designed to enhance poor power factor loads by keeping the AC line current sinusoidal and in phase with the line voltage. Proper power factor control keeps the apparent input power phase to ballast 2 close to that of the real power it consumes thereby increasing the ballast's operating efficiency in that respect.

When power is turned on, the first half-cycle or haversine 40 thereof output by bridge 18, see FIGURE 3, reaches a value of 170 volts peak with an input voltage of 120 volts rms. Capacitors 26, 32 and 34 are initially discharged. Capacitors 26 and 32, when discharged appear shorted and when subjected to the initial haversine in an AC circuit, act as a voltage divider as determined by their respective capacitive values, for the initial haversine 40. In this instance, if the value of capacitor 26 is selected to be 24 microfarads and the value of capacitor 32 is chosen to be 48 microfarads, then capacitor 26, in the absence of other limits, would have two thirds of the peak of voltage 20 or 113.3 volts impressed across it and capacitor 32 would have one third of voltage 20 or 56.7 volts impressed across it. If the input voltage is as low as 90 volts, the voltage across capacitor 32 is still more than 30 volts, which is sufficient to turn on power factor chip 38. At the same time, resistor 30 limits the in-rush current to capacitor 26. As a result, the voltage division preciously referred to across capacitors 26 and 32 actually occurs between capacitor 26, resistor 30 and capacitor 32, with resistor 30 serving the dual function of also limiting in-rush current on the first-half cycle. Capacitor 34 would have little effect on the voltage divider aspects of capacitors 26 and 32 since it is very small in value compared to capacitors 26 and 32.

Ordinarily, one third of the peak of voltage 20, a voltage of 56.7 volts in this instance, across capacitor 32 would be more than sufficient to burn it out. However, the combination of resistors 42 and 44 with FET 46 imposes a pre-set voltage limit across capacitor 32, which also protects IC chip 38. The values of resistors 42 and 44 are selected to have the voltage limit across capacitor 32 set to 15 volts in this instance. When the voltage across capacitor 32 exceeds its preset limit, FET 46 turns on pulling its base and line 48 to ground. Since line 48 is connected to one side of capacitor 26 and the base of diode 28, when line 48 goes to ground, capacitor 26 acts as an open circuit to further haversines and becomes a filter capacitor to the high DC voltage to power FETs 158 and 160. At the same time, diode 28 is back biased thereby eliminating the further flow of current through diode 28 and resistor 30 and preventing capacitor 32 from being charged above its preset limit of 15 volts. This is true regardless of the value of input voltage in its nominal range of 90 to 300 volts AC, 50 to 60 Hertz.

In this manner, the circuit arrangement described above limits the total in-rush current at an input of 120 volts, where the voltage and current are 90 degrees out of phase with each other, the worst case, to 4.3 amps at an input of 120 volts AC. At the same time, the circuit insures that the appropriate voltage is applied to pin 36 of the power factor chip 38 to start it without ongoing loss of power even when the input voltage is at lowest expected value, in this case 90 volts AC. Further, even at this lowest possible input voltage, the circuit elements cooperate to provide an "instant on" capability for the power factor chip which gets turned on in the first half cycle of power over an input voltage range of 90 to 300 volts AC.

By way of comparison, the prior art method of using a resistor connected between the output of a ballast's power supply and the voltage supply pin of power correction circuit, such as IC 38, would require a design tradeoff between power loss and turn on time over the expected input voltage range of 90 to 300 volt AC. For example, a 100k ohm resistor connected to rectifier bridge 18 and across capacitor 32 at 300 volts AC input would cause a current of about 4 milliamps, draw about 0.9 watts and take approximately 0.25 seconds to charge capacitor 32 to the minimum level required to start IC 38. On the other hand, the same 100k ohm resistor at 90 volts AC input would draw only 80 milliwatts, but take almost 2.0 seconds to turn on IC 38. As will be explained hereinafter, the availability of voltage to turn on the lamps is dependent upon operation of the power circuit chip 38. The longer IC 38 takes to turn on, the longer it takes for the lamps to be illuminated.

Further, if the power factor chip is initially turned on by connecting a resistor from the output of a full wave rectifier bridge or other DC source to the chip's input pin and a capacitor, such as capacitor 32, that resistor continues to dissipate wattage even when it is not needed after IC 38 is started. This usually wastes, depending on the size of the resistor selected, from approximately 80 milliwatts to 900 milliwatts and while that seems low when compared to other electronic devices, the overall saving in a setting where many lamps and ballasts are used, such as in a parking garage or large warehouse with hundreds of lamp fixtures, provides a considerable cost saving.

It is important to note that once appropriate power to chip 38 is provided, FET 46 is turned on as explained above, and as a result, diode 28 and resistor 30 are removed from the active circuit path. Since current is now supplied on a boost basis through coil 22b, diode 70 and resistor 72 to capacitor 32, resistor 30 isn't needed and the lack of current flow therethrough avoids power waste. The net effect is that resistor 30 is used during the first half cycle of operation to limit in-rush current and act as part of a voltage divider until FET 46 conducts after which it is effectively removed from the operational portion of the ballast's power supply circuit.

In addition, since the time constant of the resistor capacitor combination at input pin 36 limits voltage buildup across the capacitor and to the input pin, it takes longer for the voltage across that capacitor to reach an appropriate level to turn on the power factor chip and the ballast. Conversely, the above-described circuit elements of the ballast insure that the ballast is turned on in the first half cycle of operation, especially for lower than usual input voltages, while that is not true in the prior art.

Once initiated, IC chip 38 is made self-supporting through the combined effects of associated circuit elements which use the output voltage 20 from rectifier bridge 18 to power chip 38 and the ballast control circuitry along with the lamps 4 with IC chip 38 serving to maintain the load power in phase with the input power. This is accomplished by forcing an inductive kick to occur in choke 22a, and derivatively in its secondary coil 22b, in phase with the haversines available at the output of full wave rectifier bridge 18. It should be noted that the IC chip 38 will shut down with no load because there will be no sustaining DC voltage.

The output voltage 20 from bridge 18 is passed to resistors 50 and 52, which form a voltage divider, and partially to capacitor 54 which helps filter voltage applied to input pin 56 of IC chip 38. Input pin 58 of IC chip 38 is held at ground. By appropriate choice of resistor values for resistors 50 and 52, the voltage on pin 56, which is in phase with the haversines of bridge output voltage 20, is typically set at around 2 volts peak. Internal to chip 38, that voltage is passed through a drive circuit (not shown) to appear on output pin 60. That voltage is applied to the gate of FET 62 and turns FET 62 on whenever the appropriate voltage level is reached during each haversine.

When FET 62 turns on, it very quickly pulls the right side of coil 22a to ground, and when it releases, causes an inductive kick in coil 22a and a reflective inductive kick in coil 22b, both of which are in phase with the haversines derived from the input power line. The induced voltage level is determined by the voltage divider formed by resistors 64 and 66. In this application, the values of resistors 64 and 66 are selected to produce a total value of 450 volts on capacitor 26. The total voltage is the result of the bridge output voltage 20 and the voltage resulting from the inductive kick in coil 22 for the time period that FET 62 is turned off. The 450 volts charge capacitors 26 and 68 to that level in phase with the input line voltage, or nearly so with the variance being approximately one decree out of phase. Capacitor 68 also serves as a high frequency filter.

Feedback from the junction of resistors 64 and 66 is provided to input pin 76 of IC chip 38 as a reference voltage Vset which is used to inform the internal circuitry of IC chip 38 that the correct DC voltage has been reached. When that occurs the drive voltage is removed from pin 60 and FET 69 is permitted to turn off until the next haversine is present.

Since capacitor 26 may be drained when the ballast 2 is loaded, the resultant 450 volts is also used via feedback to keep IC chip 38 powered on as well as to provide power to the remainder of the ballast 2 and to the lamps 4. Feedback power to IC chip 38 is provided by coil 22b, through diode 70 and resistor 72 to capacitors 32 and 34. Capacitor 32 applies power to input pin 58 of IC 38 as previously described through the voltage limiting combination of resistors 42 and 44 and FET 46. Diode 70 and resistor 72 are inserted in the path from coil 22b to capacitors 32 and 34. Diode 70 serves to prevent discharge from capacitors 32 or 34 from causing unwanted current flow into coil 22b while. resistor 72 serves to limit current in that circuit leg to capacitors 32 and 34 and acts as a filter in conjunction with capacitors 32 and 34 for pin 58.

The combination of resistors 78 and 80 and capacitor 82 serve to protect FET 62 by limiting and filtering the current signal drawn when FET 62 turns on. Resistor 80 is selected to have a low value, typically a few tenths of an ohm. Drive voltage is supplied to output pin 88 and resistor 80 serves to limit that to a current value that can easily be tolerated by FET 62. In addition, the voltage drop across resistor 80 determines the level at which FET 62 is turned off since it provides a delay that results from its RC combinational effect with capacitor 82. In addition, resistor 78 and capacitor 82 provide a high frequency filter capability for current flowing to pin 88.

On balance, the net effect of the front end portion of ballast 2 is to provide a precision, high voltage DC power supply with power factor compensation for an electronic ballast that turns on in its first half cycle of operation at reduced power consumption even when the input voltage level is at its lowest expected value. The front end portion also features a limited in-rush current capability that is automatically removed from the operational portion of the circuit thereby conserving power. The front end ballast portion also provides isolated control circuit power. In fact, the use of transformers to power the lamps 4 insures that there is no direct electrical connection from the input power source to the control circuit or the output (the lamps).

Current flowing through coil 22a causes current to flow in secondary coil 22c by transformer action. When coil 22a experiences the previously described inductive kick, a like and proportional increase in current flow is experienced in coil 22c. By selecting an appropriate turns ratio between coils 22a and 22c, the induced voltage in coil 22c can be set to any desired level. In this case, that level can be as low as 14 volts and as high as 40 rectified volts DC, depending on the contribution of the inductive kick to voltage generated in coil 22c and the load being driven by the ballast 2. As indicated by the dots in FIGURE 2 alongside coil 22a, 22b and 22c, their phases are chosen accordingly.

The power for the control circuit portion of ballast 2 is derived from coil 22c and passes through diode 90, which prevents reverse current flow into the front end portion of ballast 2, to input pin 92 of integrated circuit chip 94, a Texas Instruments TPS2813 multi-function chip. The voltage is filtered for high frequency by capacitors 96 and 98. Input pin 92 serves as the input to an internal voltage regulator in IC chip 94. The output of that regulator is pin 100 which is held at a constant value of 11.5 volts by the regulator's action over the range of the 14 to 40 volts which appears on input pin 92. Output pin 100 is connected to input pin 102 of the CMOS integrated circuit chip 104, an RCA voltage controlled oscillator. Output pin 100, in the dimming version of ballast 2, is also connected to operational amplifier 106, an LMC6032.

Control of IC chip 104 is based on the capacitive value of capacitor 116 which is connected across pins 112 and 114 of IC chip 104 and the values of resistors 122 and 124. The value of resistor 122 determines the lower frequency operating limit of IC chip 104 while the value of resistor 124 determines its upper frequency limit. The voltage on input pin 126 determines the operating frequency of the output voltage, a DC square wave, on pin 150 of IC chip 104. If the voltage on pin 126 is zero volts, the output on pin 150 oscillates at its lowest frequency as determined by resistor 122. If the voltage on pin 126 reaches it highest value, then the output on pin 150 of chip 104 oscillates at its highest possible frequency as set by resistor 124.

As noted above, the values of capacitor 116 and resistors 122 and 124 determine the minimum to maximum frequency range of response for chip 104. If the voltage on pin 126 is zero volts, for example, then the values of resistor 122 and capacitor 116 determine the minimum frequency of the voltage on pin 150. If the voltage on pin 126 reaches its maximum value of $V_{cc}$, the voltage on pin 102, then the values of resistor 124 and capacitor 116 determine the maximum frequency of the square wave present on pin 150. Further, it should be recognized that the frequency control range is linear, that is, for example, a 10% change in voltage on pin 126 will produce a 10% change in the frequency of the voltage on pin 150. Alternatively stated, the values of resistors 122 and 124 also determine the slope of the frequency range from its minimum to maximum values.

A set of matched resistors 128 is coupled between operational amplifiers 106 and 110 and a dimming reference voltage source 130 that is comprised of current sensing coil 132, resistor 134 and diode 136. Resistor set 128 is a set of equivalent valued resistors that are matched to a tolerance of 50 parts per million which creates a very good differential amplifier when used in conjunction with amplifiers 106 and 110. As used with resistor set 128, the resultant differential amplifiers 106 and 110 have a very high common mode rejection ratio which is important since the lines going out to the dimming control may run long distances and the resulting voltage variations, if slight, will need to be accounted for by the ballast control circuitry 2b.

Voltage from a dimming switch (not shown) that is located near the lamps to be controlled, is applied across terminals 138 and 140. That voltage is applied through resistors in set 128 to the inputs of differential amplifier 106. The output of amplifier 106 is fed. again through one of the set 128 resistors to a summing point 141 and from there to the positive input I of differential amplifier 110. At the same time, a reference current induced by current in the high voltage lines to one of the lamps which is on or illuminated, is derived by transformer action in coil 132 and forwarded to a resistor in set 128 and the resultant voltage is also passed to summing point 141 and input 108b of amplifier 110. The actual voltage on input pin 108b is, in this case, the average of the dimmer voltage and the lamp reference voltage as derived from coil 132. If the dimmer voltage is assumed to be 3 volts and the lamp reference voltage is assumed to be 3.5 volts, then the average voltage is 3.25 volts and that is what is applied to input 108b of amplifier 110.

The output of amplifier 110 is fed through resistor 142 to input pin 126 of chip 104 thereby changing the voltage on pin 126 and the operating frequency of the voltage on output pin 150. This will cause a change in the voltage applied to and the brightness, or illumination intensity, of the lamps 4, raising or lowering the reference current developed in coil 132 as desired. When the brightness called for by the voltage across terminals 138 and 140 is reached, the output of differential amplifier 110 no longer changes from the value called for by the dimmer and pin 126 is then left at a constant voltage. In the above example, this would mean that the voltage from the dimmer is at 3 volts and the lamp reference voltage is also 3 volts. That makes their sum 3 volts which holds pin 126 of chip 104 constant, that is, until a change in brightness or illumination intensity is called for.

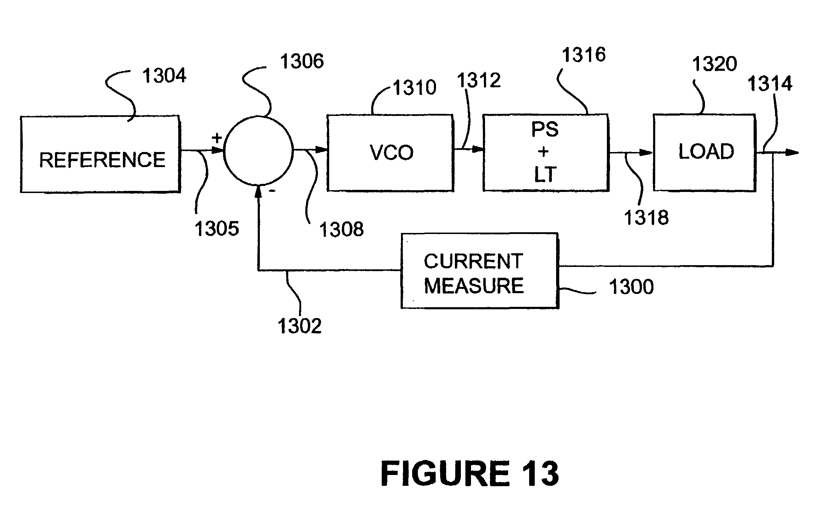

A simplified block diagram of a negative feedback control loop, such as the one embodied in FIGURE 2, is shown in FIGURE 13. Electrical current, depicted diagrammatically as flowing in line 1314, is measured by a current measuring device 1300. Examples of current measuring device 1300 are a coil or transformer, and one example is shown as element 132 in FIGURE 2. Device 1300 generates a signal, typically a voltage, depicted diagrammatically as flowing in line 1302, that is connected to a summation circuit 1306 which is preferably an op-amp. A reference signal source 1304 is preferably a potentiometer connected to a voltage source. Source 1304 produces a reference signal 1305, preferably a voltage, that is connected to the summation circuit 1306. In a dimmable ballast embodiment, the reference voltage 1305 is typically set by a user to adjust the brightness or illumination intensity of the lamps 4, which is shown as load 1320 in FIGURE 13. In an alternative embodiment, the reference voltage 1305 may be a fixed value that is indicative of a desired brightness setting.

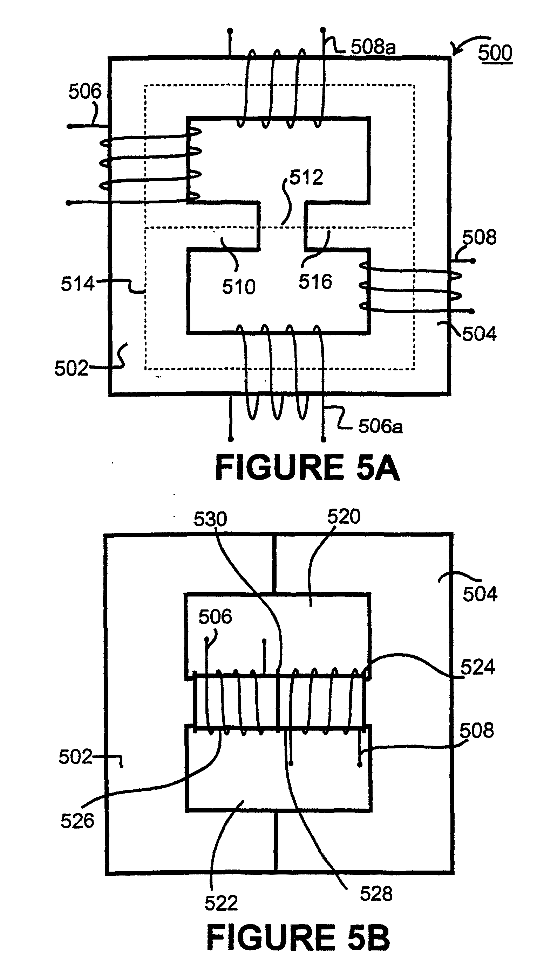

The summation circuit 1306 subtracts the signal 1302 from the reference signal 1305 to arrive at a command signal 1308 that is connected to the input of the voltage controlled oscillator 1310. The output 1312 of the voltage controlled oscillator 1310 has its frequency adjusted in accordance with the command voltage 1308. The frequency controlled output 1312 is used to drive a power supply circuit having a leakage transformer, shown as block 1316 in FIGURE 13. The leakage transformer, shown as 500 in FIGURE 5, limits current based on the frequency of the output 1312, thus limiting current to the load 4. Thus, line 1318 in FIGURE 13 represents a current limited electrical signal that is connected to a load 1320, which is equivalent to the load 4 for the case of gas discharge lamps. Thus, the voltage controlled oscillator 1310, the leakage transformer 500, the load 4, and the current measurement device 1300 comprise parts of a feedback control system to maintain a desired current in the load 4.

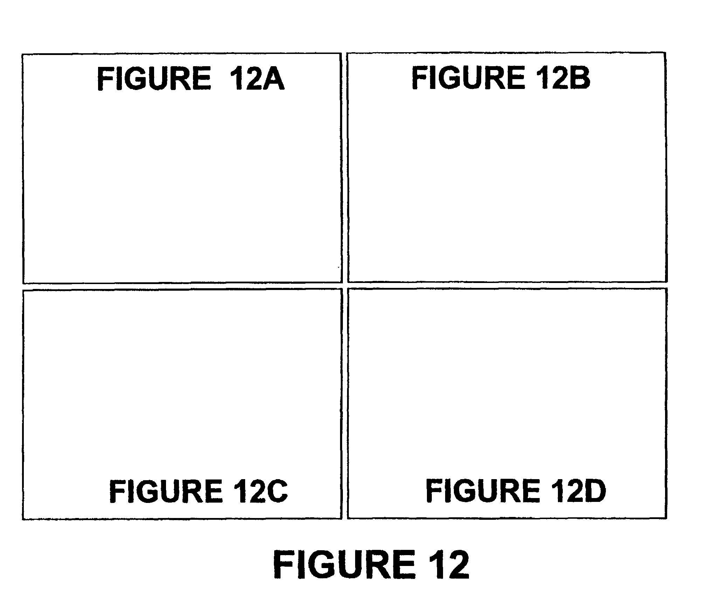

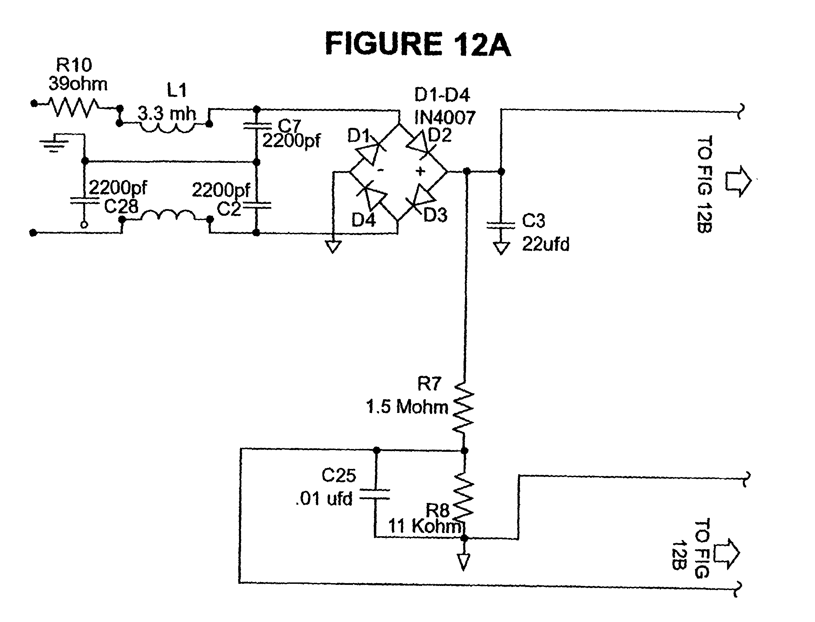

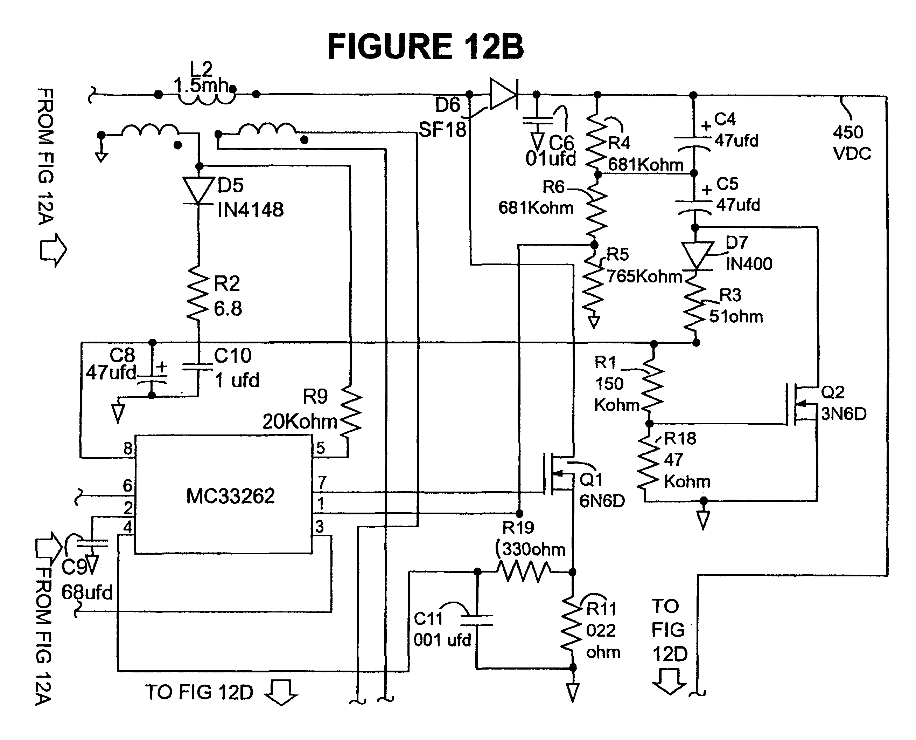

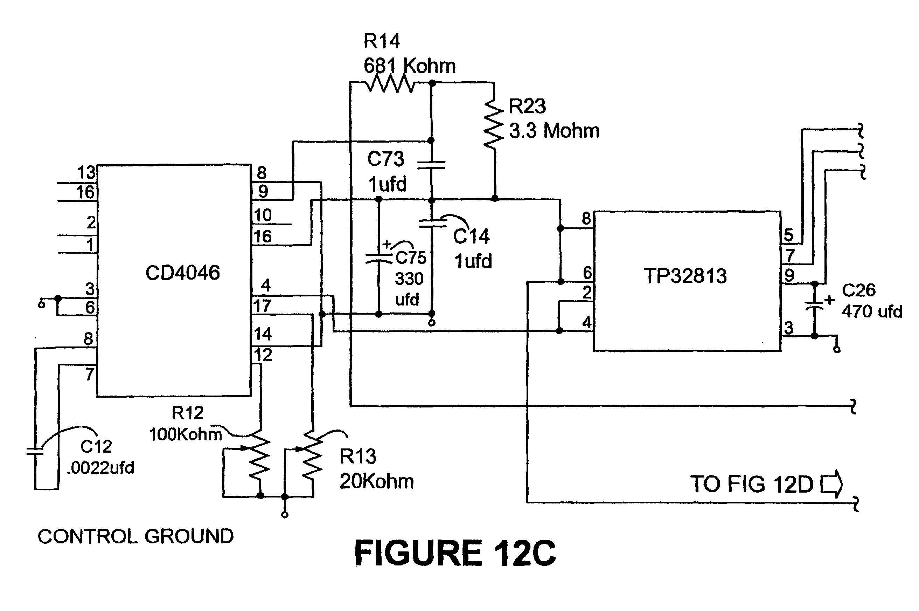

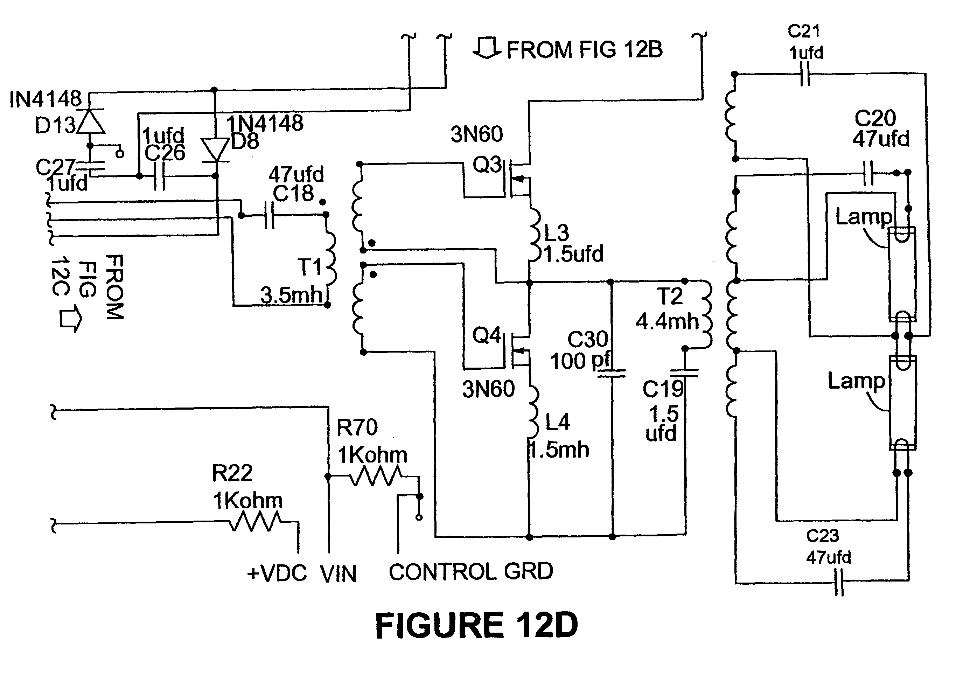

In an alternative embodiment, shown in FIGURE 12, the feedback control is eliminated in favor of an open-loop control system. The open-loop embodiment does not have the functional equivalent of block 1300 in FIGURE 13. Instead, control of the voltage controlled oscillator, 1310 in FIGURE 13, is based on the reference signal 1305 without benefit of the feedback reference 1302. In many applications, an open-loop embodiment gives adequate performance and may be preferable due to its lower cost.

The embodiment shown in FIGURE 12 has a similar electronic circuit architecture to the embodiment shown in FIGURE 2. In FIGURE 12, part CD4046 is a voltage controlled oscillator, such as described in block 1310 of FIGURE 13. Components T1, Q3, and Q4 in FIGURE 12 comprise a standard push-pull driver circuit that is part of the power supply in block 1316 of FIGURE 13. The loosely coupled transformer in 1316 is shown as component T2 in FIGURE 12 and T2A in FIGURE 2. As can be observed from FIGURE 12, there is no feedback from the secondary side of transformer T2.

A single ballast in this embodiment supplies from one to four lamps. In a closed loop feedback embodiment, such as chosen in FIGURE 2, the importance of the negative feedback action of the lamp reference signal 1302 is that the control system, shown in FIGURE 13 places the appropriate voltage on all lamps to create the brightness called for by the dimmer regardless of variations from ballast to ballast or dimmer switch to dimmer switch. In essence this means that the same current in each lamp is controlled by a single ballast in response to the feedback resulting from the sum of the dimmer voltage 1305 and the reference voltage 1302. This removes the effects of component variations from ballast to ballast and predicates lamp brightness, or illumination intensity, under dimmer control on responsiveness to the current feedback from coil 132, in the embodiment of FIGURE 2, as summed with the dimmer voltage. The ballast 2 can also maintain brightness if one of the lamps 4 burns out.

Referring back to FIGURE 2, at start-up or turn-on, capacitor 144, which is connected across pins 100 and 126, is discharged. When pin 100 comes up to its steady state or regulated voltage of 11.5 volts, capacitor 144 pulls pin 126 to the regulated voltage. Capacitor 144 is then charged to the regulated voltage of pin 100 by resistor 142 and the output of amplifier 110. This causes the ballast to sweep in from the highest frequency at start-up to a lower frequency as represented by the output voltage of amplifier 110. The lamps like this methodology because they ionize better at higher frequencies and the lower currents produced by transformer 162. Essentially, this is a soft or gentle start for the lamps which preserves their fluorescent coatings and promotes longer lamp life.

Capacitor 144, once charged, also serves as part of a low frequency filter for the control system as connected between the output of amplifier 110 and resistor 142 with resistor 142 to handle brightness switching transients. For example, when the dimmer control voltage is changed by a user, the output of amplifier 110 changes almost instantaneously. Similarly, if the lamp reference current developed in coil 132 changes, the output of amplifier 110 also changes almost instantaneously. If the control system were to respond as quickly as it ordinarily might to such changes, the lamps would flicker or flutter until the desired brightness or illumination intensity was reached. To avoid this problem, capacitor 144, once charged, and resistor 142 form an RC circuit which imposes a time delay on the signal applied to pin 126 and thereby smoothes the brightness transitions. Thus, the combination of capacitor 144 and resistor 142, depending on where the control circuit is in the operating cycle can act as a low pass filter when running or as a differentiator at start-up.

The square wave voltage output of chip 104, as previously noted, is dependent on the voltage at pin 126. At initiation, pin 126 is relatively high and thus the frequency of the voltage at pin 150 is also high. Pin 150 goes to input pins 152 of chip 94. Internal to chip 94 are two buffers which place an output voltage on each of the pins 154 and 156 of chip 94. These outputs are of the same frequency, but shifted 180 degrees out of phase with each other. This has the effect of doubling the voltage across the primary winding 162a of pulse transformer 162. The internal buffers of chip 94 are driven by powerful drivers that are capable of providing pulsed current flow in the order of 2 amps into capacitive loads, the kind exhibited by a FET. This capability permits a relatively weak signal to be boosted so that the power FETs 158 and 160 can be turned on very quickly. This has the effect of minimizing transition losses, which are dependent on how fast the power FETs are turned on (in this application in approximately 40 nanoseconds). The FETs are selected to have the lowest possible "on-resistance" or impedance so that power losses through the FETs and in the ballast are kept to a minimum. Finally, chip 94 acts as a buffer between the low power CMOS implemented voltage control oscillator chip 104 and the power FETs 158 and 160.

The outputs from driver pins 154 and 156 are a set of very closely matched square waves whose edges are within 40 nanoseconds of each other with high pulsed drive (2 amp) capacity. The AC coupling effect of capacitor 164 permits the low impedance primary inductor 162a to be effectively connected to output pins 154 and 156. With this output, the control circuit will drive the primary side of closely coupled pulse transformer 162a, the signal amplitude of which is effectively doubled at secondary transformer windings 162b and 162c to plus and minus 11 volts by the out of phase output from pins 154 and 156. This effectively puts a 22 volt square wave across primary 162a. On the secondary side of transformer 162, this means that power FET 158 will have plus 11 volts applied across its gate and source while power FET 160 will have minus 11 volts applied across its gate and source. Since the FETs are selected with optimized values of minimal on-resistance when gate to source voltage is greater than plus 5 volts and off-resistance is maximal when gate to source voltage is less than minus 5 volts, they are each turned on and off very quickly by the plus and minus 11 volts applied across their respective gate and source by the secondary windings 162b and 162c respectively. This guarantees that the power FETs 158 and 160 are turned on and off very quickly which minimizes transition losses.

The secondary windings 162b and 162c are out of phase with each other by 180 degrees guarantying that the gate to source voltages generated therein that turn the power FETs on and off will also be out of phase by that amount. However, the edges of the generated voltages are so sharp and fast that there is a possibility that the FETs could be on at the same time, even if briefly permitting the 450 volts present at point 166 to be conducted to ground. That would be unsafe and undoubtedly cause a problem in the ballast or pose a threat to a user. Accordingly, inductors 168 and 170 are connected from one side of each secondary winding to the source of the associated FET, as shown in FIGURE 2, to impose a slight delay and thereby establishing a safe zone and insuring that the power FETs 158 and 160 are not on at the same time.

The center point 180 of the power FETs 158 and 160 is connected to the primary side 178a of a unique transformer 178 that will be described hereinafter in greater detail. The on-off action of power FETs 158 and 160 drives point 180 between 450 volts and ground. Capacitor 176 provides AC coupling for primary winding 178a. Capacitor 176, which is connected to ground, charges to the middle of the voltage swing at point 180 or to 225 volts. This effectively causes an AC voltage to be impressed on primary winding 178a that varies between 0 to 225 to 450 volts. The diodes 172 and 174 are very fast and respectively serve to protect the FETs 158 and 160 from any inductive kick that results from abrupt voltage changes in the primary winding 178a caused by the power FETs shutting off.

Transformer 178 is an over-wound, current limiting type. When primary 178a turns on, transformer action causes voltage to be induced in secondary windings 178b, 178c, 178d and 178e. The voltage developed across secondary winding 178d during normal, steady state operation is approximately 280 volts rms. The main power for lamps comes from secondary winding 178d. Secondary windings 178b, 178c and 179e provide voltage to the lamp filaments 182, 184, 186 and 188. The secondary filament voltage developed by windings 178b, 178c and 178e is 5 volts rms. As shown in FIGURE 2, secondary winding 178b is connected to filaments 184 and 186, secondary winding 178c is connected to filament 182 and secondary winding 178e is connected to filament 188.

At start-up, because it's over-wound, secondary winding 178d goes to approximately 470 volts rms, a voltage level that is needed to ignite the lamps and cause ionization of their internal gas. At the same time, secondary windings 178b, 178c and 178e provide approximately 9 volts to the filaments. As previously noted for start-up, the drive frequency is at its maximum value. At start-up, each of the capacitors 190, 192 and 194 can be considered as shorted and the result is that the voltage across the lamps from secondary winding 178d is at a maximum to help ionize the gas within the lamps and cause gentle lamp ignition. Operating frequency is then at its highest possible value for the control circuit portion and secondary 178d current is at its lowest value, holding the filaments are at an elevated voltage level which warms the lamps and helps get them started by promoting electron flow from the filaments.

Since gas discharge lamps are easier to ionize at higher frequencies, the start voltage profile presented to the lamps promotes what is called a "soft start." The starting voltage for the lamps is predetermined to be at an initial frequency of 100KHz which is swept down to the operating frequency of a non-dimming ballast or to the frequency set point corresponding to the feedback provided by the dimming switch (not shown) and associated dimming circuitry. At the higher operating frequency, less current is drawn in the secondary and that means that less power is delivered to the lamps as a result of transformer 178 action. This "soft start" results in significantly reduced flickering and noise from the lamps during their start phase. In addition, the lower starting current reduces depletion of the phosphor on the sidewalls of the lamps thereby prolonging their life.

When the lamps start to draw current, secondary coil 178d goes to approximately 280 volts, a selected value that's typical for T8 type gas discharge lamps (this value would be different for other types of gas discharge lamps), due to the current limiting nature of transformer 178. The other secondary winding voltages and the filaments they are connected to simultaneously drop to 5 volts for the same reason. The frequency starts decreasing to wherever the control point has been set at terminals 138 and 140.

Nominally, after start, secondary windings 178b, 178c and 178e are at 5 volts and stay at the level even as the frequency for control purposes drops. However, the filament voltages are now dependent on the impedance presented by capacitors 190, 192 and 194 to the respective filaments they are coupled to. The value of capacitors 190, 192 and 194 is to select capacitive values that will drop actual filament voltages to about 2.5 volts for full light or minimum control frequency or 5 volts at 10 percent light, which corresponds to almost the maximum control frequency since at low light levels it is important to apply full voltage to the respective filaments to keep the lamps internally heated and thereby avoid lamp flicker.

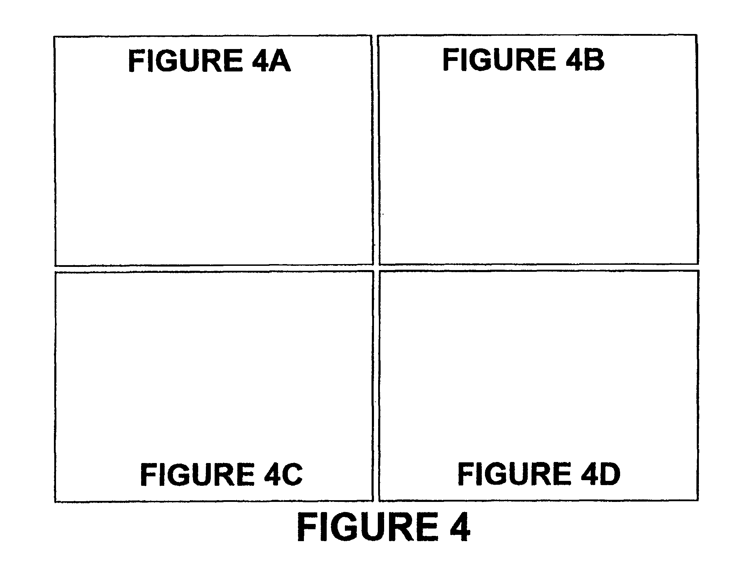

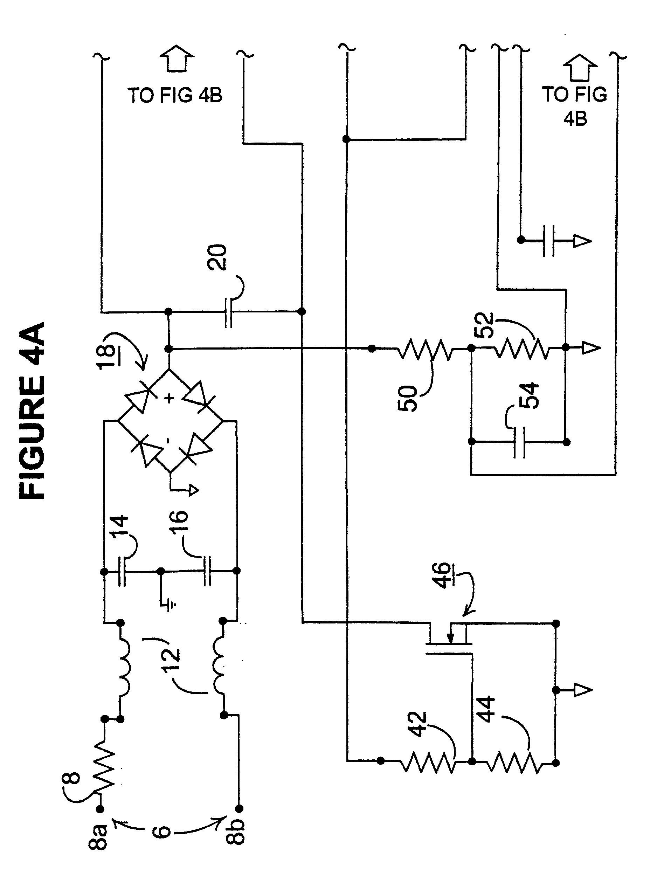

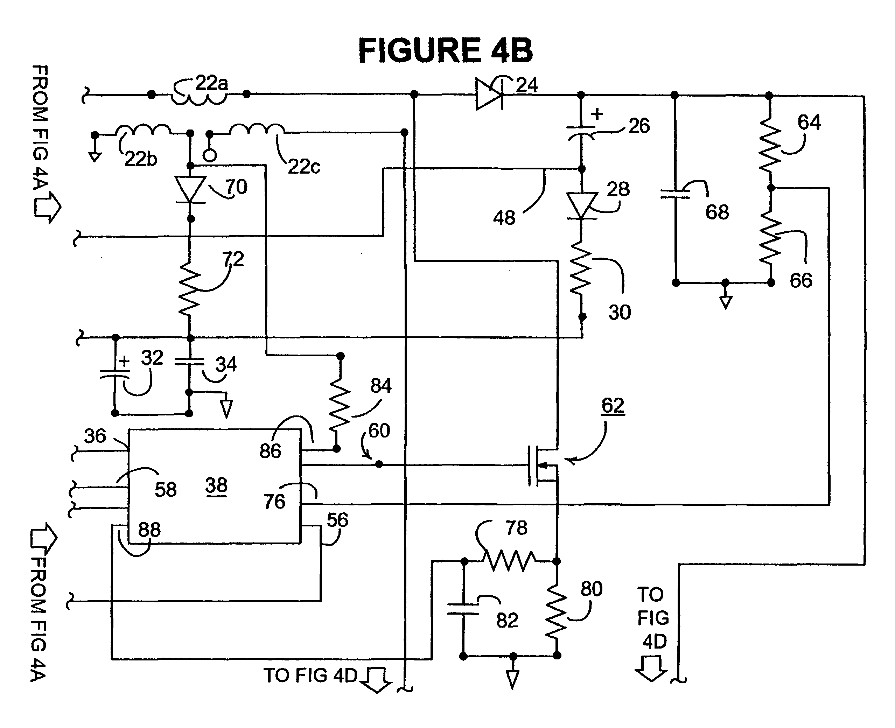

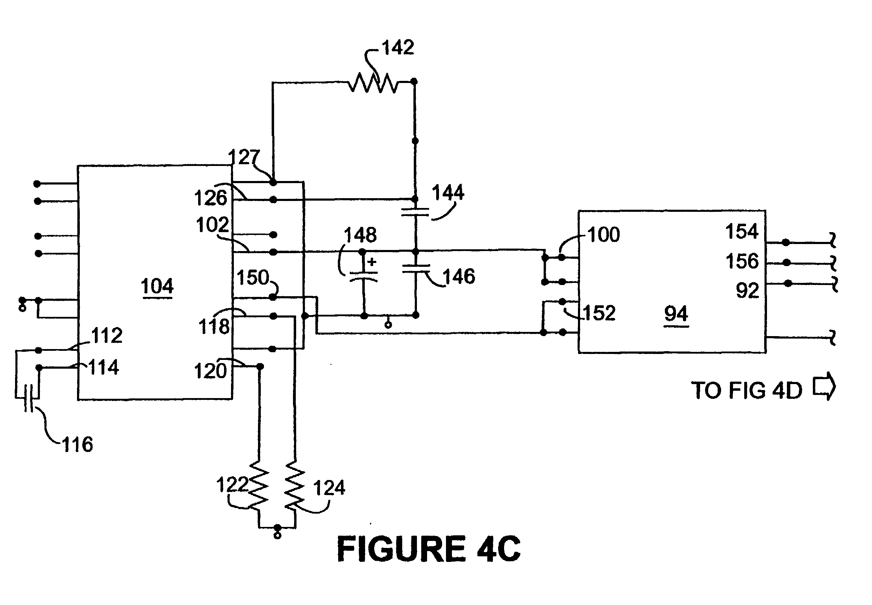

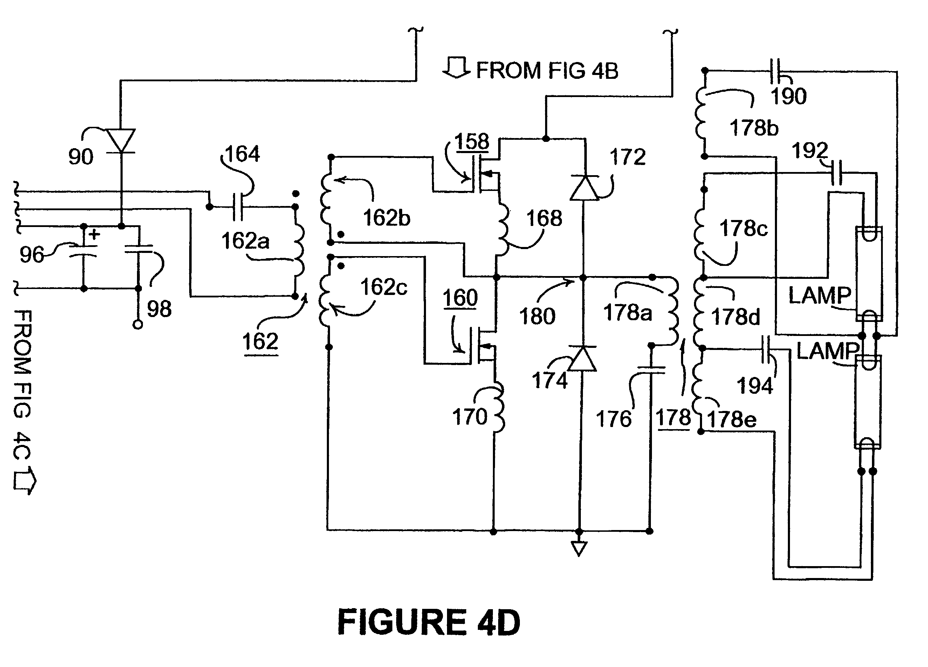

An equivalent, non-dimming electronic ballast 200 is shown in FIGURE 4. The power supply portion of the non-dimming version of ballast 200, is identical to the power supply portion of the dimming version of ballast 2 shown in FIGURE 2. The control circuit portion, of the non-dimming version of ballast 200 functions the same as the control circuit portion of the dimming version in all respects, except as follows. Differential amplifiers 10b6 and 110 are removed from the control circuit of ballast 2 together with the set of matched resistors 128 and terminal 138 and 140, compare FIGURES 2 and 4. The end of resistor 142 that was connected to the output of differential amplifier 110 is removed therefrom and connected to input pin 127 of IC 104, compare FIGURES 2 and 4 once more. Pin 126 remains coupled between resistor 142 and capacitor 144. At start, capacitor 144 is discharged, effectively a short, which pulls pin 126 to the top of its voltage range, insuring a maximum frequency output voltage on pin 150 to obtain the sweep in profile previously explained that the lamps favor. As capacitor 144 charges, the voltage to pin 126 eventually diminishes to its minimum value, and the frequency of the voltage at pin 150 drops linearly by the same percentage to the steady operating frequency. As preciously noted, the selected values of resistors 122 and 124 determine the maximum and minimum frequencies for the square wave voltage output on pin 150.

Also, in the non-dimming arrangement, the lamp current reference sensing circuit, comprising sensing coil 132, resistor 134 and diode 136, are also removed from the ballast 2 control circuit along with the lamp filament capacitors 190, 192 and 194, compare FIGURES 2 and 4. The resultant non-dimming ballast 200 formed by removal of the above enumerated circuit elements and reconnection of resistor 142 directly to IC 104 is otherwise identical to dimming ballast 2.

The parameters of transformer 178 are selected to accommodate several performance factors including the power to be delivered to efficiently drive lamps 4, the open circuit voltage required to initially turn on lamps 4 and the lamp current crest factor (the ratio of peak lamp current to the rms lamp current) which should be kept below 1.7. In addition, because of its current limiting capabilities, a short circuit or high current demand situation on the secondary side of transformer 178 drops apparent power delivered by transformer 178 to its secondary winding by an approximate factor of 10. There is an equivalent reduction of input power to the ballast as well.

The use of transformer 178, a frequency controlled, current limiting device, and frequency control of the ballast are the keys in providing an improved ballast. In addition, short circuit isolation is provided by the transformer which isolates the load from the ultimate source of power and limits short circuit current to a small fraction of what it would otherwise be.

Control is obtained by varying the voltage to input pin 126 of the voltage controlled oscillator chip 104 to produce an output drive voltage of essentially constant amplitude and variable frequency or holding the voltage (for a non-dimming version of the ballast) at a constant value that produces a voltage at a predetermined constant frequency. The net effect is that the current induced in the secondary side of transformer 178 is directly dependent on the frequency of the applied square wave. The use of such an arrangement limits current and voltage as a function of frequency and negates any need to employ pulse width modulation and its associated resonate circuit to clean up the voltage ripple. The present electronic ballast obviates that need while providing smoother, more efficient operating conditions.

In a loosely coupled transformer, the concept of leakage inductance is a mathematical way to account for the less than theoretically possible magnetic coupling between its primary and secondary windings. FIGURES 5(a) and 5 (b) depict loosely coupled transformers. The transformer core consists of two E-shaped, facing ferromagnetic members 502 and 504. The center leg is defined by two openings in the core, shown in FIGURE 5(b) as 520 and 522. The center leg of the core may be constructed to include a gap, as shown in FIGURE 5(a), or the center leg may be gapless, as shown in FIGURE 5(b). The primary and secondary coils (506 and 508, respectively) may be located at various positions on the perimeter of the core (see also 506a and 508a), as shown in FIGURE 5(a). Alternatively, the primary and secondary coils 506 and 508 may be located in a spaced apart relation along the center leg or member, and wound through two openings in the core as shown in FIGURE 5(b).

In the embodiment of FIGURE 5(a), the center portions of the E-shaped core forms a shunt 510 which has an air gap 512 of predetermined, suitable width. Those having skill in this art will recognize that the gap 512 in shunt 510 can also be formed of different material than air; for example, a dielectric material or even a fluid mixture of predetermined characteristics. Further, it has been found through experimentation that an appropriate leakage inductance can be achieved without a gap. An example of a gapless design includes a primary and secondary winding located on a center leg of a core, and spaced apart from each other.

A plastic bobbin 524 is preferably used to hold the windings. Wire is wound directly on the bobbin 524, which is then inserted on the center leg. After insertion, the ferromagnetic core is bonded together, thus capturing the bobbin 524. In the preferred embodiment, the bobbin has a first section 526 for the primary winding 506 and a second section 528 for the secondary winding 508. By separating the winding into different sections, it has been found that the transformer will have relatively high efficiency, while still generating an appropriate leakage inductance A separator 530 on the bobbin 524, preferably made of plastic and located between the first section 526 and the second section 528, is used to separate the primary winding 506 from the secondary winding 508.

In its usual operating state, case 2 as described hereinafter, the primary flux path for transformer 500 is around the periphery as indicated by dotted line 514. Under short circuit conditions, case 3 as described hereinafter, primary magnetic flux flow is through the shunt 510 and across the air gap 512, as shown by dotted line 516. Gap 512 can be varied as may be suitable for various applications to shift the reluctance and response of transformer 500 in accordance with the type of load and the control schema being used therefor. It should be noted that the specific shape of the transformer core is not limited to the depicted E-shape and that an elliptical, circular or rectangular or other configuration can be employed in a controller with the shunt placed in the core's outer periphery or internal thereto as may be desirable. For those having an interest in further and more specific details of transformers, including those of loosely couple transformers, reference should be made to the aforementioned Lee reference and in Transformers For Electronic Circuits by N. R. Grossner, second edition, published 1983 by McGraw-Hill, New York, NY.

An equivalent model representation of the loosely coupled transformer 500 is shown in FIGURE 6. The inductance $L_p$ of the primary side of transformer 600 is considered to be entirely included in winding 602 and its resistive component $R_p$ is considered to be entirely included in resistor 604. Thus, for purposes of modeling and analysis, the primary coil is divided into a purely inductive component and a purely resistive component. On the secondary side, winding 606 is considered to represent the secondary inductance $L_s$. The load 608 is assumed to be purely resistive for modeling purposes, consisting of the secondary winding resistance $R_s$ and the load resistance $R_L$.

The operating characteristics of this model and the coupling of transformer 500 are determined as follows. Assuming a turns ratio of 1 to 2, a step-up transformer, the inductance $L_p$ of the primary and the inductance $L_s$ of the secondary are measured when the secondary is open circuited and short circuited. With the secondary of a test (loosely coupled transformer open, the apparent inductance of the primary $L_{po}$, was measured at 40 millihenries. With the secondary of the same test transformer shorted, the primary $L_{ps}$ was measured at 40 millihenries. The inductive ratios for this primary as given by:

$$(2) \qquad \text{Inductive Coupling Ratio} = L_{po}/L_{\cdot ps}$$

indicated a coupling ratio of 10. It should be noted that the same ratio will be obtained by comparing secondary inductance under the same secondary open and short circuited conditions, taking the transformer's turn ratio into account. As a general rule of thumb, an inductive coupling ratio below 10 is considered to be "loose," while an inductive coupling ratio above 30 is considered to be tight." As implemented, the inductive coupling ratio of a transformer should vary between 10 and 30. Alternatively stated, from 80% to 99% of the magnetic flux developed in the transformer's primary winding, depending on the operating characteristics of the transformer with respect to load requirements, should be flow through the transformer's secondary winding. This range is intended to encompass transformers with the electrical characteristics generally shown in FIGURE 7.

Many variations of a leakage transformer are possible. Skilled artisans will appreciate that several factors can affect the inherent leakage inductance of a transformer, including the shape of the core, the placement of the windings, the size and shape of the gap (if any), and the nature of the windings.

There are three basic cases of operation that can be used to define or describe the operating characteristics of transformer 500. For purposes of this description, it is again assumed that transformer 500 is overwound so that a 2 to 1 turns ratio exists; that is, the transformer acts as a step-up device in which the input voltage V is doubled across the secondary winding 606. For purposes of the simplified transformer model to be discussed, it is further assumed that transformer 500 is "perfect" (no operating losses. $R_p = 0$) in operation.

In the first modeled case, load 608 is considered to be very large, essentially an open circuit. In that instance, the secondary current through load 608 and secondary winding 606 would be extremely small. Likewise, because transformer 500 is assumed to be "perfect," the primary current is also quite small. Thus, under open load conditions, transformer 500 acts to transfer a low amount of power from primary to secondary in accordance with its windings turn ratio.

Skipping to case 3, load 608 is now considered to be extremely small, essentially a short circuit. In such a situation, the power delivered to the load 608 is essentially zero (a very low or zero voltage multiplied by the secondary current) and $I_p$. the current in the primary, is determined by the voltage applied to the primary winding and its frequency. Since transformer 500 is considered to be perfect, the current in the primary is one half that of the secondary (with the assumed 2:1 turns ratio), and is, therefore, very low. Primary current flow due to winding 602 is a function of the input voltage and frequency and remains low as well as 90° out of phase with the voltage $V_p$. Thus, as the secondary approaches a short circuit condition, apparent primary current becomes low and drops toward zero amps.

In the intermediate case 2, where the secondary load 608 varies between open circuit and short circuit conditions, the primary current $I_p$ is determined by the voltage $V_p$ impressed across the primary, its frequency and the short circuit inductance $L_{ps}$ of the primary winding 602. As shown in FIGURE 7, at low frequencies, the winding current is relatively high and is relatively low at high frequencies since, at any given frequency, the inductance of the transformer windings, and therefore their impedance, varies inversely as a function of the frequency of the impressed primary voltage.

For example, with load 608 at 1200 ohms, an input voltage of 225 volts rms at a frequency of 100 kilohertz and an inductance $L_p$ of 4 millihenries and a primary resistance of 600 ohms, the primary current $I_p$ can be determined to be the primary voltage divided by its impedance $Z_p$:

$$(3) \quad I_p = V_p / Z_p \text{ (where } Z_p = 2 \ \text{☎} \ F \ L_p - R_p)$$

$$= 225 / (100 \times 10^3) (6.28) (4 \times 10^3) + (R_p) = 225 / (2512 + 600)$$

$$= 0.0723 \text{ amps or approximately 72 milliamps.}$$

If the frequency in the intermediate case is increased to 200 kilohertz, primary current will drop to approximately 40 milliamps. If the frequency is decreased to 50 kilohertz, primary current increases to approximately 121 milliamps. Thus, changing the frequency of the transformer's driving voltage permits control of power delivered to the load and as a limit for operating current, both as a function of the frequency of the driving voltage applied to the transformer's primary winding. The frequency change in driving voltage effectively alters the operating characteristics of the transformer by changing its inductive reactance and impedance.

The resultant relationship between transformer current and frequency is shown in FIGURE 7 in which a plot of primary current $I_p$ and secondary current $I_s$ versus frequency of the impressed primary voltage is depicted. It should be noted that the position of $I_s$ with respect to that of $I_p$ will be a function of the turns ratio of the transformer's primary and secondary windings.

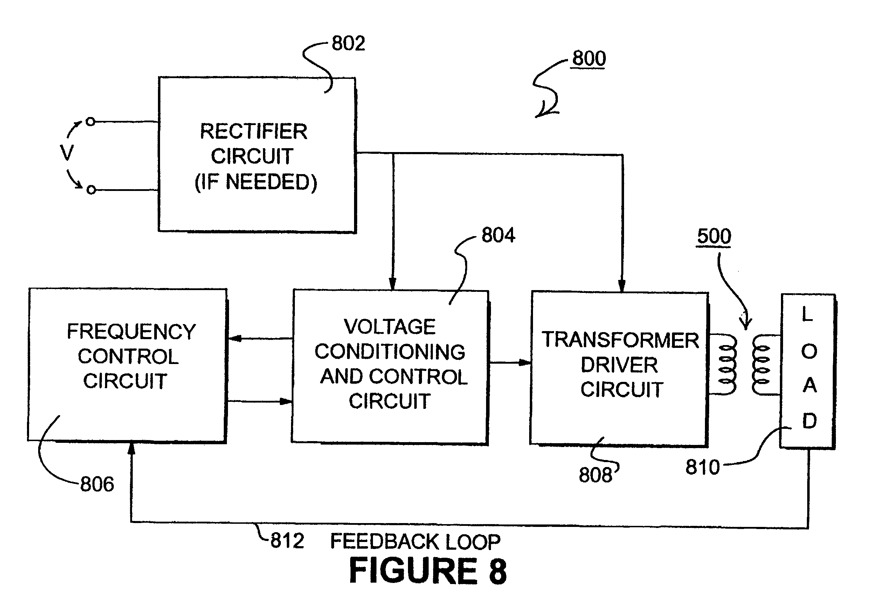

The ability to control the characteristics of a loosely coupled transformer where its winding inductance, and therefore its impedance, can be varied as a function of frequency can be utilized in a controller or regulator as previously described in connection with ballast 2. A simplified general schematic diagram of such a controller is shown in FIGURE 8. Line voltage V at a level and frequency commonly available is provided to a rectifier circuit 802 which rectifies that input as may be needed by the other circuitry and load. The rectified and possibly boosted or reduced voltage, to the extent such boosted voltage may be needed in a specific application, is supplied to a voltage conditioning and control circuit 804. Control circuit 804 forwards a reference voltage signal to the frequency control circuit 806, which adjusts the frequency of its output in accordance with that reference, subject to any chances in that output frequency, as may be called for and required by the load 810 though its feedback loop 812.

The output from the frequency control circuit block 806 is fed to control circuit 804 where it is used to produce a desired voltage type (e.g - square wave, varying pulse train, haversines, etc.) that is forwarded to transformer driver circuit 808. The transformer drivers thereby created in block 808 are used to generate drivers for transformer 500 which is coupled to the load 810 whereby power is delivered thereto. It will be readily apparent, as explained above, that control of the transformer's operating characteristics can be suitably made dependent on the frequency of the voltage impressed upon transformer 500's primary winding. Furthermore, it can readily be seen from the relationship depicted in FIGURE 7 and the controller schematic of FIGURE 8, and as demonstrated in connection with the dimming version of ballast 2, that load feedback can be used to appropriately vary the frequency of the voltage impressed on the transformer to vary its winding currents and thereby achieve regulated and/or controlled transfer of waveforms, power or load control.

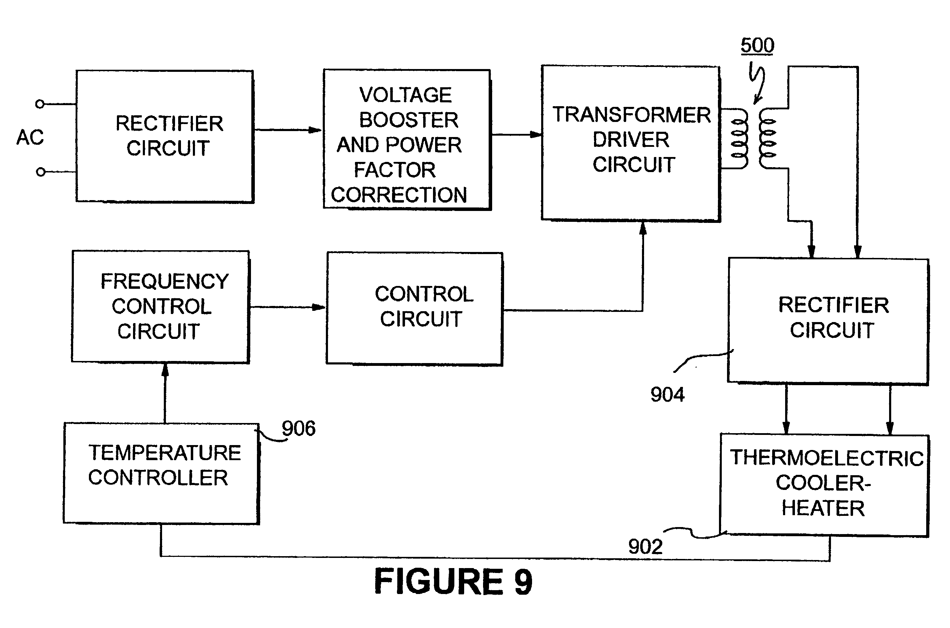

An example of how a controller 900 can be used is illustrated schematically in FIGURE 9. In the FIGURE 9 arrangement, a thermoelectric cooler/heater 902 is controlled by the application of appropriate voltage from loosely coupled transformer 500 and rectifier circuit 904. As external temperature conditions change or as a user desires, feedback to or a set point signal from temperature controller 906 is used to adjust the output of frequency controller 908 to thereby change the frequency of the driver voltage impressed upon transformer 500 in a manner previously discussed in connection with the operation of electronic ballast 2.

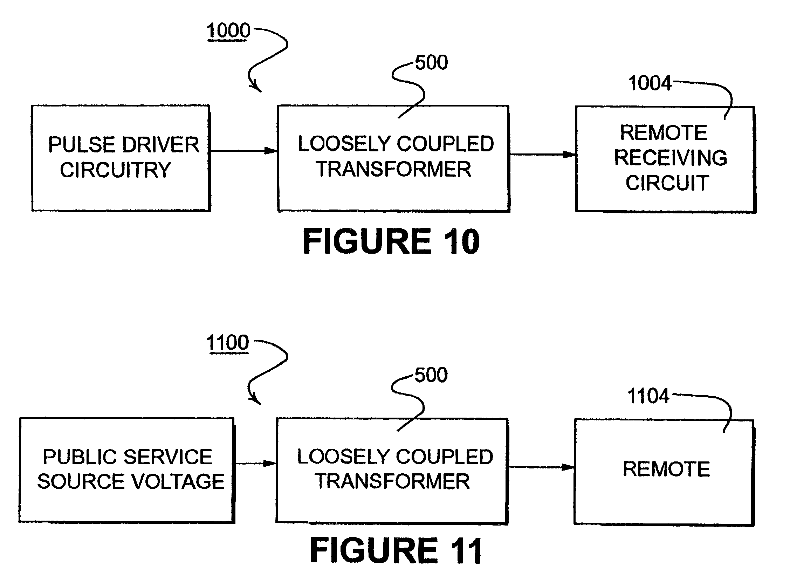

Another example of how a controller 1000 can be employed is schematically shown in FIGURE 10. In the FIGURE 10 arrangement, pulse driver circuitry 1002 is adapted to deliver a pulse train of varying frequency to a remote receiving circuit or load 1004 through loosely coupled transformer 500. Voltage applied to transformer 500 is set so to the lowest or fundamental frequency of pulses delivered by the pulse driver circuitry 1002 so that the maximum current drawn would be limited thereby. In the event of overload or malfunction in the secondary, feedback to shift the operating frequency point upwardly can be advantageously employed co limit current.

Yet another example of how a controller 1100 can be utilized is illustrated in FIGURE 11 wherein source voltage from a public power provider 1102 is passed to a substation or industrial complex load 1104 via loosely coupled transformer 500. Alternatively, the load 1104 could consist of a motor or set of motors which are periodically placed on or taken off line. Transformer 500 could be a step up, step down or unity wound transformer, but it can be adapted by frequency control of its characteristics so that heavy output load or a short circuit could not pull down or reduce the source voltage to other users.

Dimming Ballast For Parallel Gas Discharge Lamps:

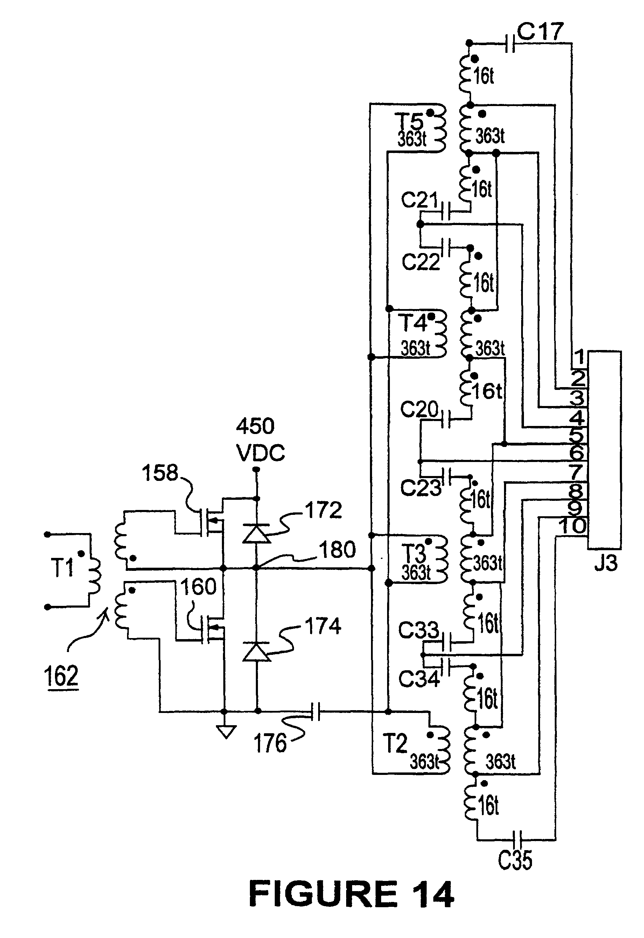

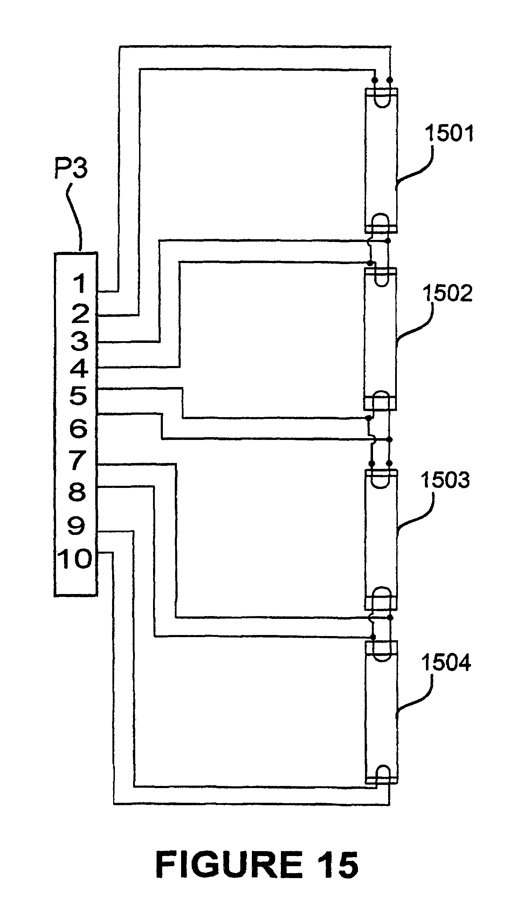

Referring now to FIGURE 14, another alternative embodiment of the dimming ballast in accordance with the present invention is shown. This unique embodiment utilizes four loosely coupled transformers T2, T3, T4, and T5 each having its primary winding connected in parallel to the output of power FET 158 and power FET 160. The secondary outputs of loosely coupled transformers T2, T3, T4 and T5 go to connector J3. Connector J3 connects to a plug P3 which in turn connects to four loads such as fluorescent lamps 1501, 1502, 1503, and 1504 shown in Fig. 15.

The power FETs are driven through transformer T1, i.e., transformer 162 of the dimming electronic ballast in FIGURE 2. Accordingly, the power and load circuits connected to the secondaries of transformer 162 in FIGURE 2 are replaced by the power and load circuits connected to the secondaries of transformer T1 in FIGURE 14 to make up the embodiment of the present invention shown in FIGURE 14. A further change between the embodiment in FIGURE 14 and the embodiment in FIGURE 2 is that no delay time inductors 168 and 170 in FIGURE 2 are connected to the sources of FETs 158 and 160. These inductors were used to provide a dead time between the switching of the FETs to ensure that they both were never on simultaneously. In the alternative embodiment in FIGURE 14, a small delay or phase shift (not shown) would be inserted between the two inputs 152 (Fig. 2) into the buffers in integrated circuit 94. As a result the square wave output from the secondaries of transformer T1 or 162 would have a slight dead time at each zero voltage crossover in the square wave. This ensures that FETs 158 and 160 are never on at the same time. The diodes 172 and 174 across the FETs are very fast and respectively serve to protect FETs 158 and 160 from any inductive kick that results from abrupt voltage changes in the primary windings caused by the power FETs shutting off.

Terminals 3 of transformers T3 and T5 are connected to the source of FET 158. Terminals 3 of transformers T2 and T4 and terminals 6 of transformers T3 and T5 are connected to the source of FET 160 through capacitor 176. The center point 180 of the power FETs 158 and 160 is connected to terminals 6 of transformers T2 and T4 and terminals 3 of transformers T3 and T5. This arrangement results in transformers T4 and T5 always being 180 degrees out of phase with each other, and therefore the voltage produced between them is always a net zero. Similarly, transformers T2 and T3 are 180 degrees out of phase, and therefore the voltage produced between them is also zero.

The on-off action of power FETs 158 and 160 drives center point 180 between 450 volts and ground. Capacitor 176 provides AC coupling for primary windings of transformers T2, T3, T4, and T5. Capacitor 176, which is connected to ground, charges to the middle of the voltage swing at point 180 or to 225 volts. This effectively causes an AC voltage to be impressed on the primary windings that varies 225 volts above and below the voltage swing point of 225 volts. In addition, the maximum voltage between any two output leads from the secondary windings will not exceed 225 volts rms.

The embodiment in FIGURES 14 and 15 is a true parallel configuration for gas discharge or fluorescent lamps. Therefore, when one lamp of the four fails, the remaining three continue to run normally, regardless of whether the failed lamp is shorted or opened.

In FIGURES 14 and 15, each of the transformers T2 through T5 is a loosely coupled transformer as described above, in which the primary to secondary turns ratio is 1:1. The primary has 363 turns and the power secondary (terminals 2 and 5) has 363 turns. Typically, the filament secondary windings of each transformer T2, T3, T4, and T5 each has 16 turns and include a 0.1 microfarad capacitor in series. The value of the capacitor is chosen so that at high frequencies during startup the capacitor is a low impedance so that current flows through the filament of the lamp. At lower frequencies during lamp operation the impedance of the capacitor is high to limit filament current to effectively place the filament windings out of the circuit when the lamps are running normally with the full running voltage provided by the main windings (terminals 2 and 5) of each transformer. For example, during startup, lamp 1501 receives filament current from terminals 1 and 2 of transformer T5 through capacitor C17 and from terminals 4 and 5 via capacitor C21. The main secondary winding between terminals 2 and 5 provides the main current through the lamp 1501 when the gas in the lamp 1501 is ionized and a plasma is formed at full power. The filament current may not be needed during full power operation, and capacitors C17 and C21 effectively limit the current to the filament windings in this condition. The full secondary current is provided by the winding between secondary terminals 2 and 5 of each transformer.

In addition, secondary terminal 5 of transformer T5 is connected to secondary terminal 2 of transformer T4, secondary terminal 2 of transformer T3 is connected to secondary terminal 5 of transformer T4, and secondary terminal 2 of transformer T2 is connected to secondary terminal 5 of transformer T3. The 363 turn secondary winding between terminal 2 and 5 of transformer T5 is connected across the gas discharge volume of lamp 1501 through pins 2 and 3 of the jack J3 and plug P3. The 363 turn secondary winding between terminal 2 and 5 of transformer T4 is connected across the gas discharge volume of lamp 1502 through pins 3 and 5 of the jack J3 and plug P3. The 363 turn secondary winding between terminals 2 and 5 of transformer T3 is connected across the gas discharge volume of lamp 1503 through pins 5 and 7 of the jack J3 and plug P3. Similarly, the 363 turn secondary winding between terminals 2 and 5 of transformer T2 is connected across the gas discharge volume of lamp 1504 through pins 7 and 9 of jack J3 and plug P3.

Transformers T2, T3, T4,and T5 are all wound with the corresponding primary and secondary winding ends correspondingly connected as is shown by the dots adjacent primary terminals 3 and secondary terminals 1, 2, and 5 in each of the transformers T2, T3, T4, and T5 in FIGURE 14. Each lamp 1501, 1502, 1503, and 1504 is driven by its own transformer. In addition, with the connection arrangement shown in FIGURES. 14 and 15, only one lamp voltage is applied to each lamp so that failure or an open circuit in one lamp circuit will not affect the operation of any other lamp.

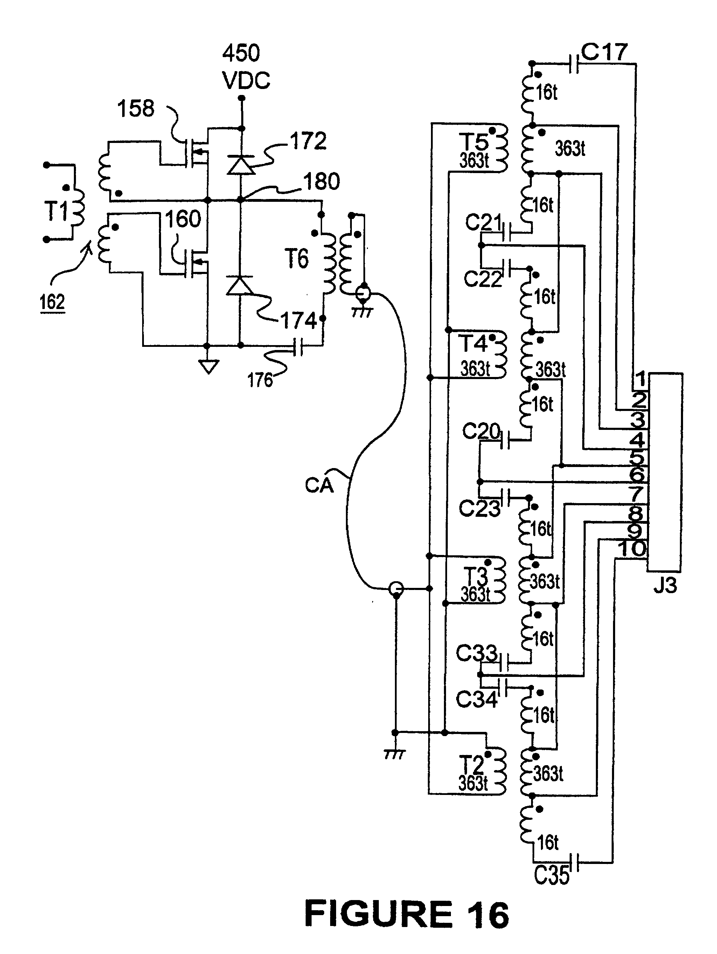

While the preferred embodiment of the invention in FIGURES 15 and 16 shows four parallel gas discharge lamps, any number of lamps could be placed in parallel. It is advantageous to add lamps in pairs so that opposite phase transformers may balance out the voltage between them. The number of lamps is only limited by the power available from the power supply and through the power FETs.

In another embodiment of the invention, shown in FIGURE 16, a coupling transformer T6 is placed between the output center power point 180 and the AC coupling capacitor 176. The coupling transformer T6 couples the power output to a coaxial cable CA. The cable CA is a transmission link to carry the high frequency power signal to the primary windings of the loosely coupled transformers T2, T3, T4 and T5. The transmission link could be any type of two wire cable. Coaxial cable is an attractive choice because its shield can be grounded for safety considerations.

The ballast control circuitry of FIGURE 14 could be located in one cabinet and the loosely coupled transformers T2, T3, T4 and T5 and the lamps 1501 through 1504 shown in FIGURE 15 simply located at the light fixture itself. The coaxial cable CA facilitates locating the ballast control 60 feet or more away from the actual location of the lamps. This arrangement would be very convenient from a maintenance and control perspective.

Further, the phrase "over-wound loosely coupled transformer" as used in this description does not refer to the turns ratio. An over-wound loosely coupled transformer simply means that the open circuit voltage at the secondary winding is higher than the operating voltage of the device being driven by the loosely coupled transformer. The actual operating voltage of the device being driven at the secondary of the transformer is determined by the leakage inductance of the transformer. At the operating frequency the overwound loosely coupled transformer operates as a current source.

Dimming Ballast For HID Lamps:

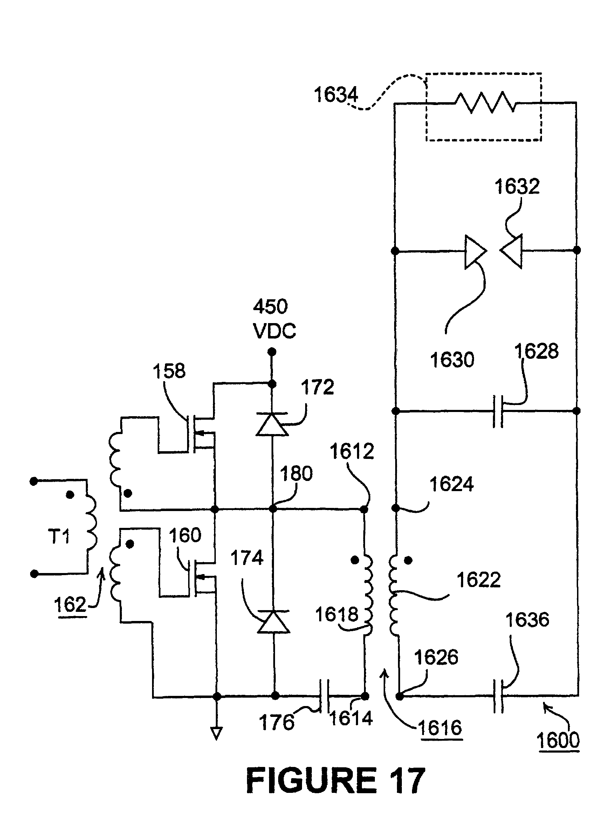

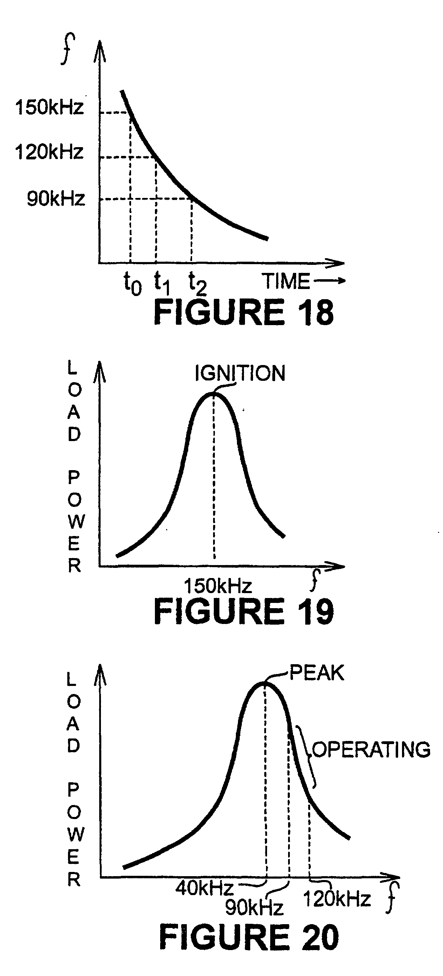

Another preferred embodiment of the present invention is shown in FIGURES 17 through 20. This embodiment is directed to driving a metal halide high intensity or high intensity discharge lamp which requires a continuous arc discharge to maintain the lamp output. A single HID lamp driver output circuit 1600 is shown in FIGURE 19 connected to a dimming control circuit as is shown in FIGURE 2 which operates as previously described. The lamp driver output circuit 1600 receives a 225 volt RMS drive signal on terminals 1612 and 1614 at a frequency that may be varied from about 90KHz to about 200 KHz from the lamp driver control circuit in FIGURE 2. The control circuit is configured to provide a variable frequency output at about 225 volts RMS.

The power FETs 158 and 160 are driven through transformer T1, i.e., transformer 162 of the dimming electronic ballast control in FIGURE 2. Accordingly, the power and load circuits connected to the secondaries of transformer 162 in FIGURE 2 are replaced by the power and load circuits connected to the secondaries of transformer T1 in FIGURE 17 to make up the embodiment of the present invention shown in FIGURE 17. A further change between the embodiment in FIGURE 17 and the embodiment in FIGURE 2 is that no delay time inductors 168 and 170 in FIGURE 2 are connected to the sources of FETs 158 and 160. These inductors were used to provide a dead time between the switching of the FETs to ensure that they both were never on simultaneously. In the alternative embodiment in FIGURE 17, a small delay or phase shift (not shown) would be inserted between the two inputs 152 (FIGURE 2) into the buffers in integrated circuit 94 (FIGURE 2). As a result the square wave output from the secondaries of transformer T1 or 162 would have a slight dead time at each zero voltage crossover in the square wave. This ensures that FETs 158 and 160 are never on at the same time. The diodes 172 and 174 across the FETs are very fast and respectively serve to protect FETs 158 and 160 from any inductive kick that results from abrupt voltage changes in the primary windings caused by the power FETs shutting off.

The circuit 1600 comprises a loosely coupled, or leaky, transformer 1616 which has a turns ratio of between about 1:0.75 to about 1:1.25 and more preferably has a turns ratio of about 1:1. In a particularly preferred embodiment shown in FIGURE 17, the transformer 1616 is an over-wound transformer wound with Litz wire. There are 100 turns of Litz wire on the primary bobbin and 100 turns of Litz wire on the secondary bobbin for a one to one turns ratio in the embodiment illustrated in FIGURE 17. The number of turns is proportional to leakage; more turns provides more leakage. The transformer 1616 is over-wound so that the open circuit voltage of the secondary is high enough to maintain the arc across arc electrodes 1630 and 1632.

The Litz wire is a multi-stranded wire which gets its name from the German word "Litzendraht" and refers to wire consisting of a number of separately insulated strands woven or bunched together such that each strand tends to take all possible positions in the cross-section of the entire conductor. This design concept results in equalizing the flux linkages and, hence reactances, of the individual strands, thereby causing the current to divide uniformly between strands. Typical applications for Litz conductors include high frequency inductors and transformers. Litz constructions are made with individually insulated strands. The insulation used on the strands is common magnet wire film insulation such as Formvar. A suitable Litz wire is obtainable from Kerrigan-Lewis Wire Products, Inc. of Chicago, IL. The Litz wire provides high current capacity for the windings. Other conductor configurations have a large surface area, such as conductive foil, could also be used to provide high current capacity for the windings.

The open inductance $L_o$ of the primary winding in the exemplary embodiment shown in FIGURE 17 may typically be about 58 millihenries and the shorted inductance $L_s$ is about 1 millihenries. The open and shorted inductances of the secondary winding are preferably the same as the primary winding, 58 mh and 1 mh, respectively and thus provides a magnetic ratio also of about 1 to 1.

The primary winding 1618 of the loosely coupled transformer 1616 is connected to input terminals 1612 and 1614 which receive the 225 volt RMS input voltage from the power FETs 158 and 160. The power signal from the FETs has a variable frequency range preferably between about 90KHz to about 200KHz. Input terminal 1614 is also connected to one side of capacitor 176. The other side of the capacitor 176 is connected to circuit common or ground. Capacitor 176 may have a value of about .01 microfarads in the exemplary embodiment shown in FIGURE 17.

The secondary winding 1622 of the loosely coupled transformer 1616 has each end connected to one of two terminals 1624 and 1626. The secondary winding 1622 is also connected in parallel with a peaking capacitor 1628, the HID lamp arc electrodes 1630 and 1632 and the high intensity discharge gas cell 1634 through another .01 microfarad capacitor 1636 having one side connected to the terminal 1626 of the secondary winding 1622. More specifically, terminal 1624 is connected to one lead or side of the peaking capacitor 1628, the electrode 1630, and the gas cell 1634. The other terminal 1626 is connected to one side of the capacitor 1636. The other side of the capacitor 1636 is connected to the other side of the peaking capacitor 1628, the electrode 1632, and the gas lamp cell 1634. The circuit 1600 according to this embodiment of the invention essentially acts as a quasi-voltage source to the lamp cell 1634.

The controller (FIGURE 2) through FETs 158 and 160 produces a high frequency signal of around 150 kHz when the lamp 1634 is initially turned on, as is shown in FIGURE 18, at t0, This frequency is high enough to generate a high voltage to ignite an arc across the arc electrodes 1630 and 1632 as is shown in FIGURE 19. This high frequency is necessary to consistently and reliably create the initial arc required. FIGURE 18 is a graph of frequency versus time and shows that after arc initiation, power frequency is reduced to an operating range of 90 kHz to 120 kHz by time t2 and t1 respectively.

FIGURE 19 is a graph of load power versus frequency during startup at 150 kHz. The drive circuit 1600 according to the present invention particularly includes the parallel peaking capacitor 1628 and the series capacitor 1636. At high frequencies, the circuit resonance occurs at around 150 kHz and is selected by the choice of capacitance of capacitor 1628, about 3300 picofarads, and the inductance of secondary winding 1622.

Once the arc is struck, the frequency output of the voltage controlled oscillator 104 (FIGURE 2) is reduced to the dimming operating range, typically between about 90 kHz and 120 kHz. Because of the choice of capacitor values, the load power versus frequency shifts has a peak value around 40 kHz, and the operating values are between 90 kHz and 120 kHz as shown in FIGURE 20. This is primarily because of the capacitance in drive circuit 1600 provided by capacitor 1636, which now predominates. The capacitor 1636 has a value chosen so as to tune secondary winding 1622 circuit resonance during normal lamp operation to a much lower resonance frequency, at about 40 kHz, which is well below the operating frequency range. FIGURE 20 is a graph of frequency versus the drive circuit LC time constant during normal driver circuit operation. It can be seen from this graph that between about 90KHz and 120kHz, the circuit time constant varies relatively proportionately with the frequency. This is the desired operational region, in which the frequency is high enough to preclude acoustic resonances from extinguishing the arc, high enough to preclude blowing up the lamp (which could occur if operated at resonance), low enough to effectively make the circuit transparent to capacitor 1628, and in a proportional region of power versus drive frequency. The operational range permits dimming control.

As set forth above, the circuit time constant is relatively short at 150kHz or higher frequencies. This latter region, between about 150kHz and 200kHz, is dominated by the effects of capacitor 1628 and thus the resonance of the circuit shifts to that shown in FIGURE 19. The capacitor 1636 is effectively transparent at the high frequencies used for turning on the lamp 1634. The dimming function, however, is done at the lower frequency range, preferably between 90-120kHz. In this frequency range, the effect of capacitor 1628 is negligible and the capacitor 1636 predominates.

A graph of Load Power versus frequency is shown in FIGURE 20. This curve shows that for the High Intensity Discharge lamp 1634 and the component values chosen, maximum power and hence maximum brightness, or illumination intensity, of the lamp cell 1634 would theoretically occur at about 40kHz. The load power at this frequency would be too high for lamp operation. However, in accordance with the present invention, the lamp 1634 is not operated at resonance and thus not at maximum brightness. Operation at this resonant high power would literally blow up the lamp.

The lamp is also not operated below the resonant frequency. Operation at low frequencies, below about 90 kHz, is undesirable because acoustic resonances tend to extinguish the arc which is necessary to continuously maintain the high intensity discharge lamp function. Rather, the operating region for dimming control is maintained above the region where acoustic resonances occurs, is shown by the dashed lines in FIGURE 20, and preferably extends between 90-120kHz. In this operating region of the curve, between 90 kHz and 120 kHz, shown in FIGURE 19, the power delivered to the lamp cell 1634 varies generally proportionately with the applied frequency. Consequently, by varying the signal frequency from the dimming control circuit (FIGURE 2) at terminals 1612 and 1614, the user can raise or dim the brightness of the High Intensity Discharge lamp 1634 relatively uniformly.

Thus a method of operating a high intensity discharge lamp connected to a loosely coupled transformer 1616 in a drive circuit 1600 having a peak load power frequency determined by the output circuit component values comprises the steps of turning on the lamp 1634 at a turn on frequency above the peak load power frequency; operating the lamp 1634 at a frequency below the turn on frequency and above the peak load power frequency; and adjusting the light output of the lamp by adjusting the lamp operating frequency via the control circuit (FIGURE 2).

More particularly the method includes turning on the lamp, typically at a frequency of at least 150kHz and preferably between 150kHz and 200kHz; and adjusting the drive frequency to operate the lamp in a frequency range above the resonant or peak power frequency and below the turn on frequency. The operating step preferably involves adjusting the control circuit output frequency feeding the loosely coupled transformer in a frequency range of 90kHz to 120kHz. This range is preferably used when the resonant or peak lamp illumination frequency is about 40kHz. Other frequency ranges would be appropriate when the peak load power frequency is different. The operating frequency range is chosen to correspond to the most linear region of the load power curve above the peak power frequency. The control of the frequency input to the transformer 1616 is essentially performed by adjusting the voltage on pin 126 of the voltage controlled oscillator 104 in FIGURE 2. The voltage on input pin 126 determines the operating frequency of the output voltage, a DC square wave, on pin 150 of IC chip 104. If the voltage on pin 126 is zero volts, the output on pin 150 oscillates at its lowest frequency as determined by resistor 122. If the voltage on pin 126 reaches it highest value, then the output on pin 150 of chip 104 oscillates at its highest possible frequency.

The present invention may be practiced otherwise than as specifically described above. Many changes, alternatives, variations, and equivalents to the various structures shown and described will be apparent to one skilled in the art. For example, different component values may be chosen depending on the operating characteristics of the high intensity lamp to be driven. The values of the peaking, first and second capacitors 1628, 176and 1636 respectively, are illustrative only as are the number of turns in the loosely coupled transformer 1616.

For example, the wattage of the HID lamp determines the number of turns in the loosely coupled transformer in the drive circuit. A larger wattage requires proportionately less turns on both primary and secondary windings because the leakage inductance needs to be less to supply more current. For example, if 100 turns were required for a 100 watt lamp, a 150 watt lamp would require ~81 turns.

Further, the phrase "over-wound loosely coupled transformer" as used in this description does not refer to the turns ratio. An over-wound loosely coupled transformer simply means that the open circuit voltage at the secondary winding is higher than the operating voltage of the device being driven by the loosely coupled transformer. The actual operating voltage of the device being driven at the secondary of the transformer is determined by the leakage inductance of the transformer. At the operating frequency the overwound loosely coupled transformer is a current source.

The schematic shown in FIGURE 17 may also be modified by connecting in parallel with terminals 1612 and 1614 a plurality of output drive circuits 1600, and thus a plurality of high intensity discharge lamps can be controlled by the dimming ballast control circuit.

It will be apparent to those of skill in the appertaining arts that various modifications can be made within the scope of the above invention. For example, four lamps are illustrated in the embodiment shown in Figs. 14 and 15. Additional loosely coupled transformers could be added along with additional lamps connected in a similar fashion to produce parallel arrangements of five or more lamps. Similarly, a fewer number of lamps may be utilized, e.g. three, in which case, one of the four transformers could be eliminated.

**Claims**

**1.** Dimming ballast controlling power delivered to a gas discharge lamp, said ballast having a loosely coupled, frequency reactance dependent transformer having primary and secondary windings, said primary winding adapted to receive a driving signal and said secondary winding driving the lamp, and the loosely coupled transformer having a reactance varying with the driving signal frequency whereby said loosely coupled transformer has a transformer impedance varying with the driving signal frequency,

   a) a control oscillator producing a frequency control signal at a given frequency:

b) a transformer driver circuit responsive to the frequency control signal and connected to said primary winding of said loosely coupled transformer to apply the driving signal to said primary winding of said transformer at a predetermined voltage amplitude and at a driving signal frequency controlled by the frequency control signal; **characterised by**:

c) said primary winding of said loosely coupled transformer reflecting to said transformer driver circuit a transformer impedance larger than the lamp impedance so that the current driving into said primary winding depends primarily upon the transformer impedance at the driving signal frequency and a resulting current in the secondary winding driving into the lamp varies with the driving signal frequency whereby illumination intensity of the lamp is controlled by changing the driving signal frequency.

2. The dimming ballast of claim 1 wherein said transformer includes a shunt having a gap therein or no gap.

3. The dimming ballast according to any of the preceding claims, which additionally comprises a feedback circuit connected between the lamp and said oscillator for applying a signal indicative of the illumination intensity to said oscillator to adjust the frequency control signal and thereby the driving signal frequency.

4. The dimming ballast of any of the preceding claims, for controlling power delivered to a plurality of gas discharge lamps, said dimming ballast further comprises: a plurality of said loosely coupled transformers each having a primary winding and a plurality of secondary windings, wherein the primary winding of each is electrically connected in parallel to the other loosely coupled transformers and to said transformer driver circuit, and wherein each of the secondary windings is electrically connected to one of the lamps and one secondary winding of each transformer is connected in signal opposition to another secondary winding of another of said transformers, wherein said illumination intensity is responsive to the driving signal frequency.

5. The dimming ballast of any of the preceding claims, wherein:

each of said loosely coupled transformers has a primary winding and a secondary winding wound in a first direction;
said loosely coupled transformers are connected in pairs with the secondary winding of each pair connected in series;
said transformer driver circuit connected to the primary winding of one transformer in each pair in a first direction and connected to the primary winding of the other transformer in the pair in a direction opposite to said first direction whereby voltage developed in the secondary winding of the one transformer in the pair has a polarity opposite to voltage developed in the secondary winding of the other transformer in the pair.

6. The dimming ballast of any of the preceding claims, wherein each loosely coupled transformer has secondary windings including a pair of windings and a main winding there between wound, each of the pair of windings connected to a filament in the lamp and the main winding connected across the electrodes of the lamp.

7. The dimming ballast of any of the preceding claims, wherein the lamp is a high intensity discharge lamp requiring a continuous arc discharge to maintain Lamp illumination, said dimming ballast further comprises:

said loosely coupled transformer having a primary winding connected to said transformer driver circuit and a secondary winding connected between a pair of secondary winding terminals;
one of said secondary winding terminals connected to one electrode of a pair of are electrodes in a high intensity discharge lamp; a series capacitor connected in series to the other of said pair of said secondary winding terminals and to the other of said pair of arc electrodes, said series capacitor tuning the secondary winding to a resonance frequency much lower than the operating frequency range for dimming; and a peaking capacitor connected in parallel with said pair of arc electrodes, said peaking capacitor provides a peak load power at a resonance frequency to ignite the arc.

8. The dimming ballast of any of the preceding claims, wherein said loosely coupled transformer has a turns ratio of substantially one to one.

9. The dimming ballast of any of the preceding claims, wherein said loosely coupled transformer is over-wound.

10. The dimming ballast of any of the preceding claims, wherein a start driving signal is at a frequency in a range between 150 kHz and 200 kHz and an operating driving signal is in a range between 90kHz and 120 kH7.

**11.** The dimming ballast of any of the preceding claims, wherein said loosely coupled transformer is remotely located from said transformer driver circuit and said ballast further comprises:

a high frequency transmission link for carrying the driving signal from said transformer driver circuit to the primary winding of said loosely coupled transformer.

**12.** The dimming ballast of any of the preceding claims, wherein said high frequency transmission link is a coaxial cable with a grounded shield.

**13.** Method for providing a dimming ballast to drive a gas discharge lamp, said dimming ballast with a loosely coupled transformer having at least one primary winding and at least one secondary winding and also having a frequency dependent impedance varying with the frequency of a driving signal applied to the primary winding, an improvement to said method comprising the steps of:

a) producing a transformer driving signal at a substantially constant voltage amplitude and at a predetermined frequency in accordance with a desired light intensity from the lamp, and **characterised in that** said predetermined frequency is such that the frequency dependent impedance of the transformer is larger than impedance of the lamp; and

b) applying the transformer driving signal at said predetermined frequency to the primary winding of the loosely coupled transformer to control current applied by the secondary winding to the gas discharge lamp and thereby control the illumination intensity from the lamp.

**14.** The method according to claim 13 wherein the impedance of the loosely coupled transformer is provided by a shunt in the transformer with a gap.

**15.** The method according to any of claims 13 to 14, and in addition the steps of: sensing current applied to the lamp;

comparing the current sensed by said sensing step to a desired reference;
generating a feedback signal in response to said comparing stop; and adjusting the predetermined frequency of the transformer driving signal in response to the feedback signal

**16.** The method of any of claims 13 to 15, wherein there are a plurality of parallel connected gas discharge lamps and a plurality of said loosely coupled transformers with one transformer connected to each lamp, wherein said applying step applies the transformer driving signal at substantially constant voltage amplitude and at said predetermined frequency to the primary winding of each loosely coupled transformer to control current applied by the secondary winding to the gas discharge lamp connected to the transformer and thereby control the brightness of the lamp.

**17.** The method of any of claims 13 to 16, in particular claim 16 wherein each of said loosely coupled transformers has a primary winding and a secondary winding wound in a first direction and said loosely coupled transformers are connected in pairs with the secondary winding of each pair connected in series, and wherein said applying step applies the transformer driving signal to the primary winding of one transformer in each pair in a first direction and to the primary winding of the other transformer in the pair in a direction opposite to said first direction whereby voltage developed in the secondary winding of the one transformer in the pair has a polarity opposite to voltage developed in the secondary winding of the other transformer in the pair.

**18.** The method of any of claims 13 to 17, wherein the lamp is a high intensity discharge lamp and said producing step comprises the steps of:

turning-on said lamp by producing a transformer driving signal at a turn-on frequency much higher than a peak load power frequency; and

operating said lamp by producing a transformer driving signal in an operating frequency range above said peak load power frequency and below the turn-on frequency.

**19.** The method of any of claims 13 to 18, wherein peak load power frequency is less than. 90kHz, said turn-on frequency is above 120kHz and said operating step produces a transformer driving signal in a frequency range of 90k.Hz to 120kHz.

20. The method of any of claims 13 to 19, and in addition a second peak load power frequency much higher than the operating frequency range and said turning-on step produces a transformer driving signal at a turn-on frequency near the second load power frequency.

21. The method of any of claim 13 to 20, wherein said loosely coupled transformer is remotely located relative to said applying step and said method further comprises:

transmitting the transformer driving signal over a transmission link from said applying step to said loosely coupled transformer,

22. The method of any of claims 13 to 21, wherein said transmission link is a coaxial cable and said method further comprises:

grounding a shield of the coaxial cable.

**Patentansprüche**

1. Dimmerballast, der die einer Gasentladungslampe zugeführte Leistung steuert, wobei der Ballast einen lose gekoppelten, Frequenz-Reaktanz-abhängigen Transformator mit einer Primärund einer Sekundärwicklung hat, wobei die Primärwicklung zum Empfang eines Treibersignals ausgebildet ist und die Sekundärwicklung die Lampe treibt, und wobei der lose gekoppelte Transformator eine Reaktanz hat, die sich mit der Treibersignalfrequenz ändert, so daß der lose gekoppelte Transformator eine Transformatorimpedanz hat, die sich mit der Treibersignalfrequenz ändert,

a) mit einem Steuerungsoszillator, der ein Frequenzsteuersignal mit einer gegebenen Frequenz erzeugt;

b) mit einer Transformatortreiberschaltung, die auf das Frequenzsteuersignal anspricht und mit der Primärwicklung des lose gekoppelten Transformators verbunden ist, um das Treibersignal an die Primärwicklung des Transformators mit einer vorbestimmten Spannungsamplitude und einer von dem Frequenzsteuersignal gesteuerten Treibersignalfrequenz anzulegen;
**dadurch gekennzeichnet, daß**:

c) die Primärwicklung des lose gekoppelten Transformators zu der Transformatortreiberschaltung eine Transformatorimpedanz reflektiert, die größer als die Lampenimpedanz ist, so daß der in die Primärwicklung fließende Strom hauptsächlich von der Transformatorimpedanz bei der Treibersignalfrequenz abhängig ist und ein resultierender Strom in der Sekundärwicklung, der in die Lampe fließt, sich mit der Treibersignalfrequenz ändert, so daß die Beleuchtungsstärke der Lampe durch Ändern der Treibersignalfrequenz gesteuert wird.

2. Dimmerballast nach Anspruch 1, wobei der Transformator einen Nebenschluß aufweist, der einen Luftspalt oder keinen Luftspalt darin hat.

3. Dimmerballast nach einem der vorhergehenden Ansprüche, der zusätzlich eine Rückkopplungsschaltung aufweist, die zwischen die Lampe und den Oszillator geschaltet ist, um dem Oszillator ein die Beleuchtungsstärke anzeigendes Signal zuzuführen, um das Frequenzsteuersignal und dadurch die Treibersignalfrequenz einzustellen.

4. Dimmerballast nach einem der vorhergehenden Ansprüche zur Steuerung der Leistung, die einer Vielzahl von Gasentladungslampen zugeführt wird, wobei der Dimmerballast ferner folgendes aufweist: eine Vielzahl der lose gekoppelten Transformatoren, die jeweils eine Primärwicklung und eine Vielzahl von Sekundärwicklungen haben, wobei die Primärwicklung eines jeden zu den anderen lose gekoppelten Transformatoren und zu der Transformatortreiberschaltung elektrisch parallelgeschaltet ist, und wobei jede der Sekundärwicklungen mit einer der Lampen elektrisch verbunden ist und eine Sekundärwicklung jedes Transformators signalmäßig entgegengesetzt zu einer anderen Sekundärwicklung eines anderen der Transformatoren geschaltet ist, wobei die Beleuchtungsstärke von der Treibersignalfrequenz abhängig ist.

**5.** Dimmerballast nach einem der vorhergehenden Ansprüche, wobei:

jeder der lose gekoppelten Transformatoren eine Primärwicklung und eine Sekundärwicklung hat, die in einer ersten Richtung gewickelt sind;
die lose gekoppelten Transformatoren paarweise verbunden sind, wobei die Sekundärwicklung jedes Paars in Reihe verbunden ist;
die Transformatortreiberschaltung mit der Primarwicklung des einen Transformators in jedem Paar in einer ersten Richtung verbunden ist und mit der Primärwicklung des anderen Transformators in dem Paar in einer zu der ersten Richtung entgegengesetzten Richtung verbunden ist, so daß die in der Sekundärwicklung des einen Transformators in dem Paar ausgebildete Spannung eine Polarität hat, die zu der in der Sekundärwicklung des anderen Transformators in dem Paar ausgebildeten Spannung entgegengesetzt ist.

**6.** Dimmerballast nach einem der vorhergehenden Ansprüche, wobei jeder lose gekoppelte Transformator Sekundärwicklungen hat, die ein Paar von Wicklungen und eine dazwischen gewickelte Hauptwicklung aufweisen, wobei jede des Paars von Wicklungen mit einem Filament in der Lampe und die Hauptwicklung über die Elektroden der Lampe verbunden ist.

**7.** Dimmerballast nach einem der vorhergehenden Ansprüche, wobei die Lampe eine Hochleistungs-Entladungslampe ist, die eine kontinuierliche Lichtbogenentladung erfordert, um die Beleuchtung der Lampe aufrechtzuerhalten, wobei der Dimmerballast ferner folgendes aufweist:

der lose gekoppelte Transformator hat eine Primärwicklung, die mit der Transformatortreiberschaltung verbunden ist, und eine Sekundärwicklung, die zwischen ein Paar Sekundärwicklungsanschlüsse geschaltet ist; einer der Sekundärwicklungsanschlüsse ist mit einer Elektrode eines Paars von Lichtbogenelektroden in einer Hochleistungs-Entladungslampe verbunden; ein Vorschaltkondensator ist mit dem anderen des Paars von Sekundärwicklungsanschlüssen und mit der anderen des Paars von Lichtbogenelektroden in Reihe geschaltet, wobei der Vorschaltkondensator die Sekundärwicklung auf eine Resonanzfrequenz abstimmt, die viel niedriger als der Betriebsfrequenzbereich zum Dimmen ist; und ein Spitzenwertkondensator ist zu dem Paar von Lichtbogenelektroden parallelgeschaltet, wobei der Spitzenwertkondensator eine Spitzenlastleistung bei einer Resonanzfrequenz zum Zünden des Lichtbogens liefert.

**8.** Dimmerballast nach einem der vorhergehenden Ansprüche, wobei der lose gekoppelte Transformator ein Windungsverhältnis von im wesentlichen Eins zu Eins hat.

**9.** Dimmerballast nach einem der vorhergehenden Ansprüche, wobei der lose gekoppelte Transformator überbewickelt ist.

**10.** Dimmerballast nach einem der vorhergehenden Ansprüche, wobei ein Starttreibersignal eine Frequenz in einem Bereich zwischen 150 kHz und 200 kHz und ein Betriebstreibersignal eine Frequenz in einem Bereich zwischen 90 kHz und 120 kHz hat.

**11.** Dimmerballast nach einem der vorhergehenden Ansprüche, wobei der lose gekoppelte Transformator entfernt von der Transformatortreiberschaltung angeordnet ist und der Ballast ferner folgendes aufweist: eine Hochfrequenz-Übertragungsstrecke zum Transport des Treibersignals von der Transformatortreiberschaltung zu der Primärwicklung des lose gekoppelten Transformators.

**12.** Dimmerballast nach einem der vorhergehenden Ansprüche, wobei die Hochfrequenz-Übertragungsstrecke ein Koaxialkabel mit geerdetem Schirm ist.

**13.** Verfahren zum Bereitstellen eines Dimmerballasts, um eine Gasentladungslampe zu treiben, wobei der Dimmerballast mit einem lose gekoppelten Transformator mindestens eine Primärwicklung und mindestens eine Sekundärwicklung und außerdem eine frequenzabhängige Impedanz hat, die sich mit der Frequenz eines an die Primärwicklung angelegten Treibersignals ändert, wobei eine Verbesserung dieses Verfahrens die folgenden Schritte aufweist:

a) Erzeugen eines Transformatortreibersignals mit einer im wesentlichen konstanten Spannungsamplitude mit einer vorbestimmten Frequenz in Übereinstimmung mit einer gewünschten Leuchtstärke der Lampe, und **dadurch gekennzeichnet, daß** die vorbestimmte Frequenz derart ist, daß die frequenzabhängige Impedanz des Transformators größer als die Impedanz der Lampe ist; und

b) Anlegen des Transformatortreibersignals mit der vorbestimmten Frequenz an die Primärwicklung des lose gekoppelten Transformators, um den von der Sekundärwicklung an die Gasentladungslampe angelegten Strom zu steuern und dadurch die Beleuchtungsstärke der Lampe zu steuern.

14. Verfahren nach Anspruch 13, wobei die Impedanz des lose gekoppelten Transformators durch einen Nebenschluß in dem Transformator mit einem Luftspalt gegeben ist.

15. Verfahren nach einem der Ansprüche 13 bis 14 mit den folgenden zusätzlichen Schritten:

Erfassen des an die Lampe angelegten Stroms;
Vergleichen des in dem Erfassungsschritt erfaßten Stroms mit einem gewünschten Referenzwert;
Erzeugen eines Rückkopplungssignals in Abhängigkeit von dem Vergleichsschritt; und Einstellen der vorbestimmten Frequenz des Transformatortreibersignals in Abhängigkeit von dem Rückkopplungssignal.

16. Verfahren nach einem der Ansprüche 13 bis 15, wobei eine Vielzahl von parallelgeschalteten Gasentladungslampen und eine Vielzahl der lose gekoppelten Transformatoren vorgesehen ist und mit jeder Lampe jeweils ein Transformator verbunden ist, wobei bei dem Schritt des Anlegens das Transformatortreibersignal mit im wesentlichen konstanter Spannungsamplitude und mit der vorbestimmten Frequenz an die Primärwicklung jedes lose gekoppelten Transformators angelegt wird, um den Strom zu steuern, der von der Sekundärwicklung an die mit dem Transformator verbundene Gasentladungslampe angelegt wird, und dadurch die Helligkeit der Lampe zu steuern.

17. Verfahren nach einem der Ansprüche 13 bis 16, insbesondere Anspruch 16, wobei jeder der lose gekoppelten Transformatoren eine Primärwicklung und eine Sekundärwicklung hat, die in einer ersten Richtung gewickelt sind, und die lose gekoppelten Transformatoren paarweise verbunden sind und die Sekundärwicklung jedes Paare in Reihe verbunden ist, und wobei bei dem Schritt des Anlegens das Transformatortreibersignal an die Primärwicklung des einen Transformators jedes Paars in einer ersten Richtung angelegt wird und an die Primärwicklung des anderen Transformators des Paars in einer zu der ersten Richtung entgegengesetzten Richtung angelegt wird, so daß die in der Sekundärwicklung des einen Transformators des Paars ausgebildete Spannung eine Polarität hat, die zu der in der Sekundärwicklung des anderen Transformators des Paars ausgebildeten Spannung entgegengesetzt ist.

18. Verfahren nach einem der Ansprüche 13 bis 17, wobei die Lampe eine Hochleistungs-Entladungslampe ist und der Erzeugungsschritt die folgenden Schritte aufweist:

Einschalten der Lampe durch Erzeugen eines Transformatortreibersignals mit einer Einschaltfrequenz, die viel höher als die Frequenz einer Spitzenlastleistung ist; und

Betreiben der Lampe durch Erzeugen eines Transformatortreibersignals in einem Betriebsfrequenzbereich oberhalb der Frequenz der Spitzenlastleistung und unterhalb der Einschaltfrequenz.

19. Verfahren nach einem der Ansprüche 13 bis 18, wobei die Frequenz der Spitzenlastleistung niedriger als 90 kHz ist, die Einschaltfrequenz oberhalb 120 kHz ist und der Betreibungsschritt ein Transformatortreibersignal in einem Frequenzbereich von 90 kHz bis 120 kHz erzeugt.

20. Verfahren nach einem der Ansprüche 13 bis 19 und zusätzlich mit einer zweiten Spitzenlastleistungsfrequenz, die viel höher als der Betriebsfrequenzbereich ist, wobei der Einschaltschritt ein Transformatortreibersignal mit einer Einschaltfrequenz nahe der zweiten Lastleistungsfrequenz erzeugt.

21. Verfahren nach einem der Ansprüche 13 bis 20, wobei der lose gekoppelte Transformator relativ zu dem Schritt des Anlegens entfernt angeordnet ist und das Verfahren ferner aufweist:

Übertragen des Transformatortreibersignals über eine Übertragungsstrecke von dem Schritt des Anlegens bis zu dem lose gekoppelten Transformator.

22. Verfahren nach einem der Ansprüche 13 bis 21, wobei die Übertragungsstrecke ein Koaxialkabel ist und das Verfahren ferner aufweist:

Erden eines Schirms des Koaxialkabels.

**Revendications**

1. Ballast à gradation de lumière commandant une énergie délivrée à une lampe à décharge de gaz, ledit ballast possédant un transformateur à couplage libre en fréquence dépendant de la réactance, possédant des enroulements primaires et secondaires, ledit enroulement primaire étant prévu pour recevoir un signal d'attaque et ledit enroulement secondaire attaquant la lampe, et le transformateur à couplage libre possédant une réactance variant avec la fréquence du signal d'attaque, ledit transformateur à couplage libre possédant ainsi une impédance de transformateur variant avec la fréquence du signal d'attaque :

   a) un oscillateur de commande produisant un signal de commande de fréquence à une fréquence donnée ;
   b) un circuit d'attaque de transformateur sensible au signal de commande de fréquence et connecté audit enroulement primaire dudit transformateur à couplage libre pour appliquer le signal d'attaque audit enroulement primaire dudit transformateur avec une amplitude de tension prédéterminée et selon une fréquence de signal d'attaque commandée par le signal de commande de fréquence ;
   **caractérisé par** :
   c) ledit enroulement primaire dudit transformateur à couplage libre appliquant audit circuit d'attaque de transformateur une impédance de transformateur plus grande que l'impédance de lampe de telle façon que le courant traversant ledit enroulement primaire dépende en premier lieu de l'impédance du transformateur à la fréquence du signal d'attaque et qu'un courant résultant dans l'enroulement secondaire traversant la lampe varie avec la fréquence du signal d'attaque, l'intensité d'éclairage de la lampe étant ainsi commandée par variation de la fréquence du signal d'attaque.

2. Ballast à gradation de lumière selon la revendication 1, dans lequel ledit transformateur comprend une dérivation possédant un intervalle incorporé ou non.

3. Ballast à gradation de lumière selon l'une quelconque des revendications précédentes, comprenant de plus un circuit de rétroaction connecté entre la lampe et ledit oscillateur pour appliquer un signal représentant l'intensité lumineuse audit oscillateur afin de régler le signal de commande de fréquence et ainsi, la fréquence du signal d'attaque.

4. Ballast à gradation de lumière selon l'une quelconque des revendications précédentes, pour la commande de l'énergie délivrée à une pluralité de lampes à décharge de gaz, ledit ballast à gradation de lumière comprenant de plus : une pluralité desdits transformateurs à couplage libre possédant chacun un enroulement primaire et une pluralité d'enroulements secondaires, l'enroulement primaire de chaque transformateur étant connecté, de façon électrique, en parallèle aux autres transformateurs à couplage libre et audit circuit d'attaque de transformateur, et dans lequel chacun des enroulements secondaires est connecté, de façon électrique, à une des lampes et un enroulement secondaire de chaque transformateur est connecté en opposition de signal à un autre enroulement secondaire d'un autre desdits transformateurs, ladite intensité lumineuse étant sensible à la fréquence du signal d'attaque.

5. Ballast à gradation de lumière selon l'une quelconque des revendications précédentes, dans lequel :

   - chacun des desdits transformateurs à couplage libre possède un enroulement primaire et un enroulement secondaire enroulés dans une première direction ;
   - lesdits transformateurs à couplage libre sont connectés par paires avec l'enroulement secondaire de chaque paire connecté en série ;
   - ledit circuit d'attaque de transformateur est connecté à l'enroulement primaire d'un transformateur de chaque paire dans une première direction et est connecté à l'enroulement primaire de l'autre transformateur de la paire dans une direction opposée à ladite première direction, la tension développée dans l'enroulement secondaire d'un premier transformateur de la paire ayant ainsi une polarité opposée à la tension développée dans l'enroulement secondaire de l'autre transformateur de la paire.

6. Ballast à gradation de lumière selon l'une quelconque des revendications précédentes, dans lequel chaque transformateur à couplage libre possède des enroulements secondaires comprenant uné paire d'enroulement et un enroulement principal interposé, chaque enroulement de la paire d'enroulement étant connecté à un filament de la lampe et l'enroulement principal étant connecté aux bornes des électrodes de la lampe.

**7.** Ballast à gradation de lumière selon l'une quelconque des revendications précédentes, dans lequel la lampe est une lampe à décharge de haute intensité nécessitant une décharge continue par arc pour maintenir l'éclairage de la lampe, ledit ballast à gradation de lumière comprenant, de plus :

- ledit transformateur à couplage libre possédant un enroulement primaire connecté audit circuit d'attaque de transformateur et un enroulement secondaire connecté entre une paire de bornes d'enroulement secondaire ;
- une desdites bornes d'enroulement secondaire connectée à une électrode d'une paire d'électrodes d'arc dans une lampe à décharge à haute intensité ;
- un condensateur connecté en série à l'autre de ladite paire desdites bornes d'enroulement secondaire et à l'autre de ladite paire d'électrodes d'arc, ledit condensateur en série accordant l'enroulement secondaire sur une fréquence de résonance bien plus basse que l'intervalle nominal de fréquences pour la gradation ; et
- un condensateur de pic connecté en parallèle avec ladite paire d'électrodes d'arc, ledit condensateur de pic fournissant une énergie de charge de pic à une fréquence de résonance pour amorcer l'arc.

**8.** Ballast à gradation de lumière selon l'une quelconque des revendications précédentes, dans lequel ledit transformateur à couplage libre possède un rapport de transformation sensiblement de un pour un.

**9.** Ballast à gradation de lumière selon l'une quelconque des revendications précédentes, dans lequel ledit transformateur à couplage libre est en surenroulement.

**10.** Ballast à gradation de lumière selon l'une quelconque des revendications précédentes, dans lequel un signal d'attaque de départ est produit à une fréquence comprise entre 150 kHz et 200 kHz et un signal d'attaque de fonctionnement est compris entre 90 kHz et 120 kHz.

**11.** Ballast à gradation de lumière selon l'une quelconque des revendications précédentes, dans lequel ledit transformateur à couplage libre est positionné à distance dudit circuit d'attaque de transformateur et ledit ballast comprend, de plus, une liaison de transmission à haute fréquence pour transporter le signal d'attaque dudit circuit d'attaque de transformateur à l'enroulement primaire dudit transformateur à couplage libre.

**12.** Ballast à gradation de lumière selon l'une quelconque des revendications précédentes, dans lequel ladite liaison de transmission à haute fréquence est un câble coaxial avec un blindage à la masse.

**13.** Procédé pour constituer un ballast à gradation de lumière pour l'attaque d'une lampe à décharge de gaz, ledit ballast à gradation de lumière étant muni d'un transformateur à couplage libre possédant au moins un enroulement primaire et au moins un enroulement secondaire et possédant de même une impédance dépendant de la fréquence et variant avec la fréquence d'un signal d'attaque appliqué à l'enroulement primaire, une amélioration dudit procédé comprenant les étapes suivantes :

a) la production d'un signal d'attaque de transformateur à une amplitude de tension sensiblement constante et à une fréquence prédéterminée selon une intensité lumineuse désirée de la lampe, et **caractérisé en ce que** ladite fréquence prédéterminée est telle que l'impédance dépendant de la fréquence du transformateur soit plus grande que l'impédance de la lampe ; et
b) l'application du signal d'attaque de transformateur à ladite fréquence prédéterminée à l'enroulement primaire du transformateur à couplage libre afin de commander le courant appliqué par l'enroulement secondaire à la lampe à décharge et pour commander ainsi l'intensité d'éclairage de la lampe.

**14.** Procédé selon la revendication 13, selon lequel l'impédance du transformateur à couplage libre est constitué par une dérivation dans le transformateur avec un intervalle.

**15.** Procédé selon l'une quelconque des revendications 13 et 14, présentant, de plus, les étapes suivantes :

- la détection du courant appliqué à la lampe ;
- la comparaison du courant détecté par ladite étape de détection avec une référence désirée ;
- la génération d'un signal de rétroaction en réponse à ladite étape de comparaison ; et

- le réglage de la fréquence prédéterminée du signal d'attaque de transformateur en réponse au signal de rétroaction.

**16.** Procédé selon l'une quelconque des revendications 13 à 15, selon lequel il existe une pluralité de lampes à décharge de gaz connectées en parallèle et une pluralité desdits transformateurs à couplage libre avec un transformateur connecté à chaque lampe, selon lequel ladite étape d'application applique le signal d'attaque de transformateur avec une amplitude de tension sensiblement constante et à ladite fréquence prédéterminée à l'enroulement primaire de chaque transformateur à couplage libre afin de commander le courant appliqué par l'enroulement secondaire à la lampe à décharge de gaz connectée au transformateur et afin de commander ainsi la luminosité de la lampe.

**17.** Procédé selon l'une quelconque des revendications 13 à 16, en particulier selon la revendication 16, selon lequel chacun desdits transformateurs à couplage libre possède un enroulement primaire et un enroulement secondaire enroulés dans une première direction et lesdits transformateurs à couplage libre sont connectés par paires avec l'enroulement secondaire de chaque paire connectée en série, et selon lequel ladite étape d'application applique le signal d'attaque de transformateur à l'enroulement primaire d'un transformateur de chaque paire dans une première direction et à l'enroulement primaire de l'autre transformateur de la paire dans une direction opposée à ladite première direction, la tension ainsi développée dans l'enroulement secondaire du premier transformateur de la paire possédant une polarité opposée à la tension développée dans l'enroulement secondaire de l'autre transformateur de la paire.

**18.** Procédé selon l'une quelconque des revendications 13 à 17, selon lequel la lampe est une lampe à décharge à haute intensité et ladite étape de production comprend les étapes suivantes :

- la mise sous tension de ladite lampe par production d'un signal d'attaque de transformateur à une fréquence de mise sous tension bien plus élevée qu'une fréquence de puissance de charge de pic ; et
- l'actionnement de ladite lampe par production d'un signal d'attaque de transformateur dans une gamme de fréquences de fonctionnement au-dessus de ladite fréquence de puissance de charge de pic et en dessous de la fréquence de mise sous tension.

**19.** Procédé selon l'une quelconque des revendications 13 à 18, selon lequel la fréquence de puissance de charge de pic est inférieure à 90 kHz, ladite fréquence de mise sous tension est supérieure à 120 kHz et ladite étape d'actionnement produit un signal d'attaque de transformateur dans une gamme de fréquences de 90 kHz à 120 kHz.

**20.** Procédé selon l'une quelconque des revendications 13 à 19, présentant, de plus, une seconde fréquence de puissance de charge de pic bien plus élevée que la gamme de fréquences de fonctionnement et ladite étape de mise sous tension produisant un signal d'attaque de transformateur à une fréquence de mise sous tension proche de la seconde fréquence de puissance de charge.

**21.** Procédé selon l'une quelconque des revendications 13 à 20, selon lequel ledit transformateur à couplage libre est positionné à distance par rapport à ladite étape d'application, et ledit procédé comprend, de plus, la transmission du signal d'attaque de transformateur sur une liaison de transmission de ladite étape d'application audit transformateur à couplage libre.

**22.** Procédé selon l'une quelconque des revendications 13 à 21, selon lequel ladite liaison de transmission est un câble coaxial et ledit procédé comprend, de plus, la mise à la masse d'un blindage du câble coaxial.

FIGURE 1

RECTIFIER CIRCUIT

VOLTAGE BOOSTER AND POWER FACTOR CORRECTION

FREQUENCY CONTROL CIRCUIT

CONTROL CIRCUIT

TRANSFORMER DRIVER CIRCUIT

LAMPS

DIMMING CONTROL CIRCUIT

19 BRIGHTNESS FEEDBACK SIGNAL FROM LAMPS

DESIRED DIMMING LEVEL SIGNAL

EP 1 078 557 B1

EP 1 078 557 B1

| FIGURE 2A | FIGURE 2B |
|-----------|-----------|
| FIGURE 2C | FIGURE 2D |

**FIGURE 2**

FIGURE 2A

# FIGURE 2B

EP 1 078 557 B1

TO FIG 2D

TO FIG 2D

154
156
92

94

100

152

110

106

142

144

146

148

127

126
102

150

118
120

124

122

104

112

114

116

**FIGURE 2C**

FIGURE 2D

FROM FIG 2B

FROM FIG 2C

EP 1 078 557 B1

31

PEAK = 170 $\underline{V}$

20

40

OUTPUT VOLTAGE FROM RECTIFIER BRIDGE 18

**FIGURE 3**

EP 1 078 557 B1

| FIGURE 4A | FIGURE 4B |
|-----------|-----------|
| FIGURE 4C | FIGURE 4D |

# FIGURE 4

EP 1 078 557 B1

# FIGURE 4A

EP 1 078 557 B1

**FIGURE 4B**

FIGURE 4C

TO FIG 4D ➡

EP 1 078 557 B1

36

FIGURE 4D

FIGURE 5A

FIGURE 5B

# FIGURE 6

# FIGURE 7

**FIGURE 8**

EP 1 078 557 B1

```
AC  ○───┐
         │  ┌──────────────┐      ┌──────────────┐      ┌──────────────┐
    ○────┤  │   RECTIFIER  │ ───> │   VOLTAGE    │ ───> │ TRANSFORMER  │
            │   CIRCUIT    │      │   BOOSTER    │      │   DRIVER     │
            │              │      │ AND POWER    │      │   CIRCUIT    │
            └──────────────┘      │   FACTOR     │      │              │
                                  │ CORRECTION   │      └──────────────┘
                                  └──────────────┘
```

500

904

906

902

| FREQUENCY CONTROL CIRCUIT | CONTROL CIRCUIT | RECTIFIER CIRCUIT |

| TEMPERATURE CONTROLLER | | THERMOELECTRIC COOLER-HEATER |

# FIGURE 9

EP 1 078 557 B1

1000

500

1004

| PULSE DRIVER CIRCUITRY | → | LOOSELY COUPLED TRANSFORMER | → | REMOTE RECEIVING CIRCUIT |

**FIGURE 10**

1100

500

1104

| PUBLIC SERVICE SOURCE VOLTAGE | → | LOOSELY COUPLED TRANSFORMER | → | REMOTE |

**FIGURE 11**

EP 1 078 557 B1

| FIGURE 12A | FIGURE 12B |
|---|---|
| FIGURE 12C | FIGURE 12D |

# FIGURE 12

# FIGURE 12A

R10
39ohm

L1
3.3 mh

C7
2200pf

D1-D4
IN4007

D1  D2
−  +
D4  D3

2200pf
C28

2200pf
C2

C3
22ufd

R7
1.5 Mohm

C25
.01 ufd

R8
11 Kohm

TO FIG 12B

TO FIG 12B

EP 1 078 557 B1

# FIGURE 12B

FIGURE 12C

IN4148
D13

1ufd
C26

1N4148
D8

C27
1ufd

47ufd
C18

FROM FIG
12C

T1
3.5mh

FROM FIG 12B

3N60
Q3

L3
1.5ufd

3N60

Q4

C30
100 pf

L4
1.5mh

T2
4.4mh

C19
1.5
ufd

R70
1Kohm

R22
1Kohm

+VDC  VIN      CONTROL GRD

C21
1ufd

C20
47ufd

Lamp

Lamp

C23
47ufd

EP 1 078 557 B1

**FIGURE 12D**

**FIGURE 13**

EP 1 078 557 B1

EP 1 078 557 B1

**FIGURE 14**

49

P3

1501

1502

1503

1504

**FIGURE 15**

**FIGURE 16**

**FIGURE 17**

**FIGURE 18**

**FIGURE 19**

**FIGURE 20**